Europäisches Patentamt

European Patent Office

Office européen des brevets

(19)

(11) **EP 1 410 952 A2**

(12) **EUROPEAN PATENT APPLICATION**

(43) Date of publication:
21.04.2004 Bulletin 2004/17

(51) Int Cl.7: **B60R 16/02**, H02J 7/14

(21) Application number: 03023390.2

(22) Date of filing: 16.10.2003

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Okada, Shin**<br>**Toyota-shi Aichi-ken, 471-8571 (JP)**<br>• **Kibe, Kazuya**<br>**Toyota-shi Aichi-ken, 471-8571 (JP)** |
| (30) Priority: **18.10.2002 JP 2002304103** | (74) Representative:<br>**Leson, Thomas Johannes Alois, Dipl.-Ing.** |
| (71) Applicant: **TOYOTA JIDOSHA KABUSHIKI KAISHA**<br>**Toyota-shi, Aichi 471-8571 (JP)** | **Tiedtke-Bühling-Kinne & Partner GbR,**<br>**TBK-Patent,**<br>**Bavariaring 4**<br>**80336 München (DE)** |

(54) **Power distribution abnormality detection method and system for an electric load device in an internal combustion engine**

(57) A generated current amount (Ialt) is obtained using a field coil power distribution duty (DF) (S554, S556), and a charged/discharged current amount (Ibat) of a battery is obtained using a voltage of the battery (VB) (S558). A current amount applied to an electric load (Iall) is obtained based on the above-obtained generated current amount (Ialt) and the charged/discharged current amount (Ibat) (S560). This makes it possible to detect an abnormality in the power distribution to the electric load device without the need of providing an additional circuit or element. Therefore, the abnormality in power distribution to the electric load device, that is, a glow plug of the internal combustion engine can be detected with high accuracy.

**F I G . 9**

EP 1 410 952 A2

**Description**

BACKGROUND OF THE INVENTION

1. Field of Invention

The invention relates to a method and a system for detecting an abnormality in power distribution to an electric load device of an internal combustion engine based on a change in power supply to the electric load device.

2. Description of Related Art

Disconnection caused in an electric load device, for example, a glow plug of an internal combustion engine or in a power supply line to the glow plug adversely influence on startability of the engine especially in cold starting. Provision of a detector that detects the disconnection in the glow plug has been proposed for the purpose of solving the aforementioned starting failure. JP-A-11-182400 as Related Art No. 1 discloses the detection of the disconnection of the glow plug itself based on the change in the voltage between upstream and downstream of the glow plug. JP-A-57-26725 as Related Art No. 2 discloses the detection of the disconnection of the glow plug based on the change ratio of the electric current of the glow plug.

JP-A-2002-115641 as Related Art No. 3 discloses the detection in the abnormality in the glow plug based on the change in the fuel injection quantity or power generation control amount of an alternator as listed below:

  Related Art No. 1: JP-A-11-182400 (p. 3, Fig. 1);
  Related Art No. 2: JP-A-57-26275 (p. 3, Figs. 3 - 5); and
  Related Art No. 3: JP-A-2002-115641 (pp. 7-8, Fig. 6).

In the aforementioned technology as disclosed in Related Art No. 1 or No. 2, the circuit through which electric current is applied to the glow plug requires further circuit or element, for example, voltage detection circuit or current detection circuit in order to detect the disconnection in the glow plug. However, this may increase the manufacturing cost and the number of parts, deteriorating reliability and mountability.

In the Related Art No. 3, no particular circuit nor element has to be added. However, the fuel injection quantity or the power generation control amount is likely to be changed in accordance with the idling speed control or the load other than the electric load, or they are not always changed accurately in accordance with the change in the electric load owing to characteristics of the engine and the alternator or control thereof. If the electric load other than the glow plug is large, the change in the fuel injection quantity or the power generation control amount influenced by connection/disconnection in power distribution to the glow plug becomes small. This may cause the false determination of the disconnection abnormality even if the glow plug is not disconnected. Especially under the condition where the power generation control amount of the alternator is set to maximum (100%), the power generation control amount is kept maximum (100%) in spite of the change in the electric load. That is why the disconnection abnormality is falsely determined even if electric current is normally applied to the glow plug.

SUMMARY OF THE INVENTION

It is an object of the invention to provide a system capable of detecting disconnection abnormality in an electric load such as a glow plug accurately by improving possibility of detecting the disconnection abnormality without providing the specific circuit or the element.

In a method of detecting an abnormality in power distribution to an electric load device of an internal combustion engine based on a value corresponding to a change in a power supply to the electric load device, a current amount applied to the electric load device is calculated based on a generated current amount to be supplied from a generator to the electric load device and a battery, and a charged/discharged current amount (Ibat) of the battery. It is determined whether there is the abnoramltiy in power distribution to the electric load device based on the value corresponding to a change in the current amount applied to the electric load device in response to the change in the power supply to the electric load device.

The current amount to be consumed by the electric load is obtained by adding the amount of generated current supplied from a generator to the electric load and a battery to the electricity discharged by the battery, or a difference between the generated current and the charged current of the battery. The current amount consumed by the electric load does not have to be directly measured by the circuit or the element specifically provided. The current amount consumed by the electric load can be accurately obtained based on the generated current amount and the charged/discharged current.

The charged current of the battery may be kept under the control of a power generation state of the generator. Under such control of the power generation state of the generator, the control amount of the generator is constantly set. Therefore, the generated current amount may be obtained based on the aforementioned information of the power generation control amount.

As the battery serves as a power source for a control unit of the internal combustion engine, the battery voltage is always detectable. As a result, the charged/discharged current amount can be obtained based on the detected battery voltage.

The current amount consumed by the electric load can be accurately derived from the generated current amount and charged/discharged current of the battery without the need of providing the specific circuit or element for detecting the abnormality. As the current amount consumed by the electric load is equivalent with the electric load itself, it is not susceptible to the idling engine speed control nor the load other than the electric load. Further, it is not susceptible to characteristics of the engine or the generator, or the control of the engine or the generator.

As a result, the capability of detecting the disconnection abnormality may be improved without the need of providing the specific circuit or the element, and the disconnection abnormality in the electric load such as the glow plug may be accurately detected.

The invention is applied to a diesel engine as the internal combustion engine, and the electric load device includes a glow plug of the internal combustion engine. It is determined whether there is the abnormality in power distribution to the glow plug based on the value corresponding to the change in the current amount in response to the change in the power supply to the glow plug.

When the power supply to the glow plug in the diesel engine is changed, the actual change in the power distribution is reflected on the degree of change in the current amount consumed by the electric load calculated based on the generated current amount and the charged/discharged current of the battery. The abnormality in power distribution to the glow plug may be determined accurately based on the degree of the change.

In the aforementioned method, an operating state of the generator is controlled by a battery voltage control mechanism based on a voltage of the battery. The generated current amount is obtained based on a generation control amount of the generator controlled by the battery voltage control mechanism. The charged/discharged current amount is obtained based on the voltage of the battery adjusted by the battery voltage control mechanism. The current amont applied to the electric load device is obtained based on the generated current amount and the charged/discharged current amount.

The amount of generated current can be obtained based on the power generation control amount to the generator by the battery voltage control mechanism without directly detecting the value of the generated current amount. The charged/discharged current amount can also be calculated based on the voltage of the battery serving as the power source. As a result, the current amount consumed by the electric load can be accurately obtained based on the above-obtained amount of generated current amount and the charged/discharged current amount.

The capability of detecting the disconnection abnormality is improved without the need of providing the specific circuit or the element, and the disconnection abnormality of the electric load such as the glow plug, thus, can be accurately detected.

In the aforementioned method, the battery voltage control mechanism executes a feedback control of the operating state of the generator using the generation control amount such that the voltage of the battery is within a reference range.

The battery voltage control mechanism may be formed to execute a feedback control as described above. The generated current amount can be obtained based on the power generation control amount to be set under the feedback control executed by the battery voltage control mechanism.

The generation control amount of the generator controlled by the battery voltage control mechanism is a field coil power distribution duty of the generator.

Assuming that the field coil power distribution duty of the generator functions as the power generation control amount, the generated current amount is proportional to the field coil power distribution duty. Therefore, the generated current amount can be accurately obtained based on the field coil power distribution duty.

The generated current amount is obtained by multiplying the field coil power distribution duty by a total load current value of the generator.

More specifically, the generated current amount can be accurately calculated by multiplying the field coil power distribution duty by the total load current value of the generator. The total load current value of the generator is obtained based on a rotational speed and a temperature of the generator.

More specifically, the total load current value of the generator varies with the rotational speed and the temperature of the generator. Such value, thus, can be accurately calculated based on the rotational speed and the temperature of the generator.

An engine speed of the internal combustion engine for driving the generator is used in place of the rotational speed of the generator.

As the generator is operated by the internal combustion engine, the engine speed may be used as the rotational speed of the generator such that the total load current value of the generator can be accurately calculated. As the engine speed is detected for controlling the internal combustion engine, the detected engine speed may be used for detecting the abnormality without the need of providing the circuit nor element to detect the rotational speed of the generator.

A temperature of a cooling water of the internal combustion engine is used in place of the temperature of the generator.

As the generator is provided in the internal combustion engine, its temperature becomes substantially the same as that of the internal combustion engine. Therefore, the temperature of the cooling water for the internal combustion engine can be used as the temperature of the generator. Accordingly the total load current value of the generator can be accurately calculated. The temperature of the cooling water is normally detected for controlling the internal combustion engine, the detected temperature of the cooling water may be used without the need of providing the circuit nor element that detects the temperature of the generator.

The charged/discharged current amount of the battery is obtained based on the voltage and a temperature of the battery.

The charged/discharged current amount of the battery can be accurately obtained based on the voltage and temperature of the battery. The charging/discharging characteristic of the battery is obtained based on the temperature of the battery. The charged/discharged current amount of the battery is obtained based on the obtained charging/discharging characteristic of the battery and the voltage of the battery.

Characteristics of charging/discharging of the battery is obtained based on the temperature of the battery. Then the charged/discharged current amount can be accurately obtained based on the characteristics and the voltage of the battery. The characteristics of charging/discharging of the battery may be the electromotive force of the battery or conductivity (or inner resistance) of the battery. This makes it possible to determine the charging/discharging state of the battery accurately. Accordingly the current at the charging/discharging of the battery can be accurately obtained.

An intake air temperature in the internal combustion engine is used in place of the temperature of the battery.

As the battery is not directly mounted on the internal combustion engine, it is susceptible to the outer temperature. Therefore, the aforementioned arrangement may allow the use of the intake air temperature in the internal combustion engine as the temperature of the battery. In this case, the charged/discharged current may be accurately obtained without the need of providing the circuit nor the element for detecting the battery temperature.

The change in the power supply to the electric load device is caused between a state where the power distribution to the electric load device is set to ON and a state where the power distribution to the electric load device is set to OFF.

If the electric current is normally applied to the electric load, the change in the power distribution state between ON and OFF state is reflected on the change in the current amount consumed by the load upon change in the power supply to the electric load. This makes it possible to determine the abnormality in the power distribution to the electric load accurately.

In a system of detecting an abnormality in power distribution to an electric load device of an internal combustion engine based on a value corresponding to a change in a power supply to the electric load device, a generated current amount supplied from a generator to the electric load device and a battery is obtained, a charged/discharged current amount of the battery is obtained, and a current amount applied to the electric load device is obtained based on the obtained generated current amount and the obtained charged/discharged current amount. It is determined whether there is the abnormality in the power distribution to the electric device based on the value corresponding to a change in the obtained current amount applied to the electric load device in response to the change in the power supply to the electric load device.

The current amount consumed by the electric load is equivalent to the sum of the generated current amount to be supplied to the electric load and the discharged current of the battery, or the difference between the generated current amount and the charged current of the battery. Accordingly the current amount consumed by the electric load can be obtained based on the generated current amount and the charged/discharged current amount of the battery without the need of providing the specific circuit or element for directly measuring the current amount consumed by the electric load.

Generally the state of charge of the battery can be appropriately maintained by controlling the condition of power generation performed by the generator. Under the aforementioned control of the power generation, the control amount of the generator is always set. Therefore, the generated current amount can be accurately obtained based on the information representing the power generation control amount of the generator.

As the battery serves as the power source for the control unit of the internal combustion engine, the battery voltage is always detectable. Accordingly the charged/discharged current amount of the battery can be obtained based on the battery voltage.

The current amount consumed by the electric load can be accurately obtained based on the generated current amount and the charged/discharged current amount of the battery without the need of providing the specific circuit or element for detecting the abnormality. The current amount consumed by the electric load is substantially equivalent to the electric load itself. Therefore, it is not susceptible to the idling speed control or the load other than the electric load. Further it is not susceptible to the characteristics or control of the internal combustion engine or the generator.

As a result, the capability of detecting the abnormality in power distribution can be improved. Such abnormality in power distribution to the electric load device can also be accurately detected based on the degree of change in the current amount consumed by the electric load.

The invention is applied to a diesel engine as the internal combustion engine. In this system, the electric load device includes a glow plug. It is determined whether there is the abnormality in power distribution to the glow plug based on the value corresponding to the change in the current amount in response to the change in the power supply to the glow plug.

Upon change in the power supply to the glow plug of the diesel engine, the determination whether there is an abnormality in the power distribution to the glow plug may be accurately obtained based on the degree of change in the calculated current amount consumed by the electric load. Therefore such determination may be accurately made based on the degree of change in the current amount consumed by the electric load.

In this system, an operating state of the generator is controlled by a battery voltage control mechanism based on the voltage of the battery (60). The generated current amount is obtained based on a generation control amount of the generator controlled by the battery voltage control mechanism. The charged/discharged current amount is obtained based on the voltage of the battery adjusted by the battery voltage control mechanism. The current amount applied to the electric load device is obtained based on the generated current amount and the charged/discharged current amount.

The generated current amount does not have to be directly detected but can be obtained based on the power generation control amount to the generator, that is output from the battery voltage control mechanism. The generated current amount is obtained based on the power generation control amount such that the charged/discharged current amount of the battery is calculated based on the voltage of the battery. This makes it possible to obtain the current amount consumed by the electric load accurately using the generated current amount and the charged/discharged current amount of the battery.

The capability of detecting the abnormality in power distribution, thus, can be improved, and the abnormality in the power distribution to the electric load can be detected based on the degree of change in the current amount consumed by the load.

The battery voltage control mechanism executes a feedback control of the operating state of the generator using the generation control amount such that the voltage of the battery is within a reference range.

The battery voltage control mechanism serves to execute the feedback control as described above. The generated current amount is obtained based on the power generation control amount set under the feedback control. The charged/discharged current amount is obtained based on the battery voltage to be adjusted under the feedback control.

A field coil power distribution duty of the generator is used as the generation control amount of the generator controlled by the battery voltage control mechanism.

Assuming that a field coil power distribution duty is used as the power generation control amount, the generated current amount is proportional to the field coil power distribution duty. Therefore, the generated current amount can be accurately obtained based on the field coil power distribution duty.

The generated current amount is obtained by multiplying the field coilo power distribution duty by a total load current value of the generator.

More specifically the field coil power distribution duty is multiplied by the total load current value so as to accurately calculate the generated current amount.

The total load current value of the generator is obtained based on a rotational speed and a temperature of the generator.

More specifically the total load current value varies in accordance with the rotational speed and temperature of the generator. Therefore, the total load current value may be calculated based on the rotational speed and the temperature of the generator. This makes it possible to calculate the total load current value, resulting in an accurate generated current amount.

An engine speed of the internal combustion engine for driving the generator is used in place of the rotational speed of the generator so as to obtain the total load current value of the generator based on the engine speed and the temperature of the generator.

As the generator is operated in the internal combustion engine, the engine speed can be used as the value representing the rotational speed of the generator. The engine speed is normally detected for controlling the internal combustion engine, the detected engine speed can be used for calculating the total load current value of the generator without the need of providing the circuit or element for measuring the rotational speed of the generator so as to detect the abnormality.

A temperature of a cooling water of the internal combustion engine is used in place of the temperature of the generator so as to obtain the total load current value of the generator.

The temperature of the generator, provided in the internal combustion engine, becomes substantially equivalent to the temperature thereof. Therefore, the temperature of cooling water for the internal combustion engine can be used as the value representing the temperature of the generator. The temperature of the cooling water is normally detected for controlling the internal combustion engine, the value of total load current of the generator can be accurately calculated without the need of providing the circuit or element for detecting the temperature of the generator.

The charged/discharged current amount of the battery is obtained based on the voltage and a temperature of the battery.

More specifically the charged/discharged current amount of of the battery is obtained based on the voltage and the temperature of the battery. This makes it possible to accurately obtain the charged/discharged current amount of the battery.

A charging/discharging characteristic of the battery is obtained based on the temperature of the battery, and the charged/discharged current amount of the battery is obtained based on the charging/discharging charactereistic of the battery and the voltage of the battery.

More specifically, the characteristics of charging/discharging of the battery is obtained based on the temperature of the battery, and the charged/discharged current amount of the battery can be obtained based on the aforementioned characteristics and the voltage of the battery. This makes it possible to calculate the charged/discharged current amount of the battery. The characteristics of charging/discharging of the battery can be represented by the electromotive force of the battery or conductivity therein (or inner resistance). This makes it possible to accurately obtain the value of the charged/discharged current amount as well as the charged or discharged state of the battery.

An intake air temperature in the internal combustion engine is used in place of the temperature of the battery so as to obtain the charged/discharged current amount of the battery based on the voltage of the battery and the intake air temperature in the internal combustion engine.

Generally the battery is susceptible to the outer temperature as it is not directly mounted on the internal combustion engine. As a result, the aforementioned arrangement makes it possible to use the intake air temperature within the internal combustion engine to represent the temperature of the battery. In this case, the charged/discharged current amount of the battery can be accurately obtained without the need of providing the circuit or element for detecting the temperature of the battery.

The change in the power supply to the electric load device is caused between a state where the power distribution to the electric load is set to ON and a state where the power distribution to the electric load is set to OFF.

Assuming that the power distribution to the electric load is normally performed, the change in the state of the power distribution between ON state and OFF state is considerably influenced by the change in the current amount consumed by the load upon a change in the power supply to the electric load. This makes it possible to determine whether there is abnormality in the power distribution to the electric load with high accuracy.

BRIEF DESCRIPTION OF THE DRAWINGS

Fig. 1 is a schematic view of a diesel engine using accumulated pressure according to a first embodiment, and a control system therefor;
Fig. 2 is a block diagram of a power supply system according to the first embodiment;
Fig. 3 is a flowchart representing a control routine for calculating a pre-condition of start-up according to the first embodiment;

Fig. 4 is a graph representing a map for obtaining a standard starting time Tstanorm by the control routine for calculating a pre-condition of start-up based on a cooling water temperature THWs upon start-up;
Fig. 5 is a graph representing a map for obtaining a minimum voltage at start-up Vstanorm by executing the control routine for calculating a pre-condition of start-up based on the cooling water temperature THWs upon start-up;
Fig. 6 is a flowchart representing a control routine for calculating a condition for executing glow abnormality determination according to the first embodiment;
Fig. 7 is a flowchart representing a control routine for determining the abnormality on a temporary basis;
Fig. 8 is a flowchart representing a control routine for determining the abnormality;
Fig. 9 is a flowchart representing a control routine for calculating amount of current consumed by the load;
Fig. 10 is a graph representing a map for obtaining a current amount generated by an alternator by executing the control routine for calculating amount of current consumed by the load based on an engine speed NE;
Fig. 11 is a graph representing a map MAPthw for obtaining a correction coefficient of a temperature using the cooling water temperature THW;
Fig. 12 is a graph representing a map MAPImax for obtaining a value of total load current based on the engine speed NE and the cooling water temperature THW;
Fig. 13 is a graph representing a map MAPa for obtaining an electromotive force of the battery based on an intake air temperature THA;
Fig. 14 is a graph representing a map MAPb for obtaining a correction coefficient indicating charging/discharging characteristics of the battery based on the intake air temperature THA;
Fig. 15 is a graph representing a map MAPibat for obtaining the battery charging/discharging amount Ibat based on the intake air temperature THA and the battery voltage VB;
Fig. 16 is a flowchart representing a control routine for calculating a condition for stopping determination of the glow abnormality according to the first embodiment;
Fig. 17 is a timing chart showing an example of the aforementioned control;
Fig. 18 is a timing chart showing another example of the aforementioned control;
Fig. 19 is a timing chart showing another example of the aforementioned control;
Fig. 20 is a timing chart showing another example of the aforementioned control;
Fig. 21 is a timing chart showing another example of the aforementioned control;

Fig. 22 is a flowchart representing a control routine for calculating a condition for executing the glow abnormality determination according to a second embodiment;

Fig. 23 is a flowchart representing a control routine for determining the abnormality on a temporary basis;

Fig. 24 is a flowchart representing a control routine for determining the abnormality;

Fig. 25 is a flowchart representing a control routine for calculating the condition for start-up of the glow abnormality determination;

Fig. 26 is a timing chart showing an example of the aforementioned control;

Fig. 27 is a timing chart showing another example of the aforementioned control;

Fig. 28 is a timing chart showing another example of the aforementioned control; and

Fig. 29 is a timing chart showing another example of the aforementioned control.

## DETAILED DESCRIPTION OF PREFERRED EMBODIMENTS

### First Embodiment

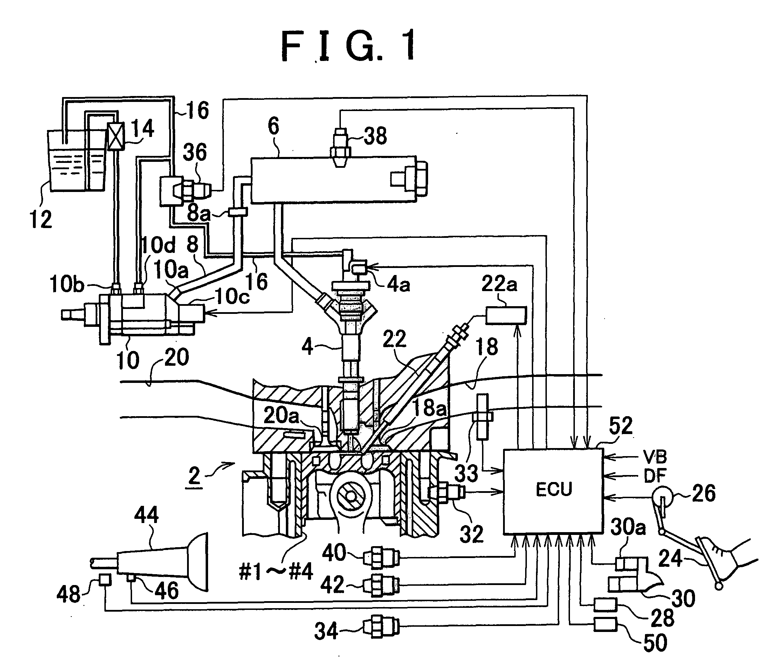

Fig. 1 is a schematic view of a diesel engine 2 using accumulated pressure of common rail type and a control system therefor in accordance with a first embodiment. The diesel engine 2 using the accumulated pressure is mounted on a vehicle.

The diesel engine 2 has a plurality of cylinders Nos. 1, 2, 3, and 4 (only one cylinder is shown in the drawing), and an injector 4 is provided in each combustion chamber of those cylinders Nos. 1 to 4. Injection of fuel from the injector 4 to the respective cylinders Nos. 1 to 4 of the diesel engine 2 is performed through ON/OFF control of an electromagnetic valve 4a for injection control.

The injector 4 is connected to a common rail 6 serving as a pressure accumulating pipe for all the cylinders Nos. 1 to 4. The fuel in the common rail 6 is injected by the injector 4 into the cylinders Nos. 1 to 4 while opening of the electromagnetic valve 4a for the injection control. The relatively higher pressure corresponding to the fuel injection pressure is accumulated within the common rail 6. The common rail 6 is connected to a discharge port 10a of a supply pump 10 via a supply pipe 8 so as to realize the pressure accumulation. A check valve 8a is provided in the middle of the supply pipe 8 so as to allow the fuel supply from the supply pump 10 to the common rail 6, and to prevent the reverse flow of the fuel from the common rail 6 to the supply pump 10.

The supply pump 10 is connected to a fuel tank 12 via an intake port 10b, and provided with a filter 14 in the middle thereof. The fuel is admitted into the supply pump 10 from the fuel tank 12 via the filter 14. The supply pump 10 makes the plunger move in a retrospective manner with a cam (not shown) rotating synchronously with the rotation of the diesel engine 2. The fuel pressure is increased to a required predetermined pressure so as to be supplied to the common rail 6.

A pressure control valve 10c is provided around the discharge port 10a of the supply pump 10. The pressure control valve 10c serves to control the pressure of the fuel discharged from the discharge port 10a to the common rail 6. When the pressure control valve 10c is opened, residual fuel that is not discharged from the discharge port 10a is returned from a return port 10d of the supply pump 10 to a fuel tank 12 via a return pipe 16.

Each combustion chamber of the cylinders Nos. 1 to 4 of the diesel engine 2 is connected to an intake passage 18 and an exhaust passage 20, respectively. A throttle valve (not shown) is provided in the intake passage 18. An opening operation of the throttle valve is controlled in accordance with the operation state of the diesel engine such that the flow rate of air admitted into the combustion chamber is controlled.

A glow plug 22 is provided within each of the respective combustion chambers of the cylinders Nos. 1 to 4 of the diesel engine 2. The glow plug 22 functions as a start-up assist device that glows upon supply of electric current via a glow relay 22a just before starting the diesel engine 2, and promotes the ignition and combustion upon spray of part of the fuel. The glow plug 22 is subjected to the power distribution abnormality determination by executing control routines as described below.

The diesel engine 2 is provided with various sensors and switches for detecting operating states of the diesel engine 2. Referring to Fig. 1, an accelerator sensor 26 is provided for detecting an opening degree of an accelerator ACCPF around an accelerator pedal 24. The diesel engine 2 is provided with an ignition switch 28 and a starter 30 for starting the diesel engine 2. The starter 30 includes a switch 30a that detects an operation state of the starter 30. A cylinder block of the diesel engine 2 is provided with a water temperature sensor 32 for detecting a temperature of cooling water (THW), and the intake passage 18 is provided with an intake air temperature sensor 33 for detecting a temperature of intake air (THA). An oil pan (not shown) is provided with an oil temperature sensor 34 for detecting a temperature THO of an engine oil. The return pipe 16 is provided with a combustion temperature sensor for detecting a combustoin temperature THF. The common rail 6 is provided with a fuel pressure sensor 38 for detecting a fuel pressure within the common rail 6. An engine speed NE sensor 40 for detecting an engine speed is provided around a pulser (not shown) of a crankshaft of the diesel engine 2. A rotation of the crankshaft is transmitted to a cam shaft (not shown) for operating the intake valve 18a and the exhaust valve 20a via a timing belt and the like. The cam shaft is set to rotate at a speed equivalent to half of that of the crankshaft. A cam angle sensor 42 is provided around a pulser (not shown) of the cam shaft. In the first embodiment, pulse signals output from those sensors 40, 42 are used to calculate an engine speed NE and a crank angle CA. A transmission 44 is provided with a shift position sensor 46 for detecting a shifting condition of the transmission 44. At an output side of the transmission 44 is provided with a shift position sensor 46 so as to detect the shift condition of the transmission. There is an air conditioning unit driven by an output of the diesel engine 2, and an air conditioning switch 50 for instructing to drive the air conditioning unit.

In the first embodiment, an electronic control unit (ECU) 52 is provided to execute various control operations of the diesel engine 2. Specifically, the ECU 52 serves to execute the control for the diesel engine 2, for example, fuel injection quantity, power distribution to the glow plug, and for determination of abnormality in the power distribution to the glow plug. The ECU 52 is formed as a micro-computer including a central processing unit (CPU), a read only memory (ROM) that stores various programs and maps, a random access memory (RAM) that temporarily stores operation results of the CPU, a back-up RAM that stores the operation results and data that have been preliminarily stored, a timer counter, an input interface, output interface. The aforementioned accelerator sensor 26, the water temperature sensor 32, the oil temperature sensor 34, the combustion temperature sensor 36, the fuel pressure sensor 38 are connected to an input interface of the ECU 52 via a buffer, multiplexer, and A/D converter (not shown). The NE sensor 40, the cam angle sensor 42, the vehicle speed sensor 48 and the like are connected to the input interaface of the ECU 52 via a waveform shaping circuit (not shown). The ignition switch 28, the switch 30a for detecting the state of the starter, the shift position sensor 46, the air-conditioning switch 50 and the like are directly connected to the input interface of the ECU 52. A signal of the battery voltage VB as the power source, and a signal of the field coil power distribution duty DF is input to the ECU 52 so as to read the aforementioned signals. The CPU reads signals sent from those sensors and switches via the input interface. The electromagnetic valve 4a, pressure control valve 10c, the glow relay 22a and the like are connected to the output interface of the ECU 52 via the drive circuit, respectively. The CPU executes an arithmetic operation based on the input value that has been read via the input interface, and a drive control of the electromagnetic valve 4a, the pressure control valve 10c, and the glow relay 22a via the output interface.

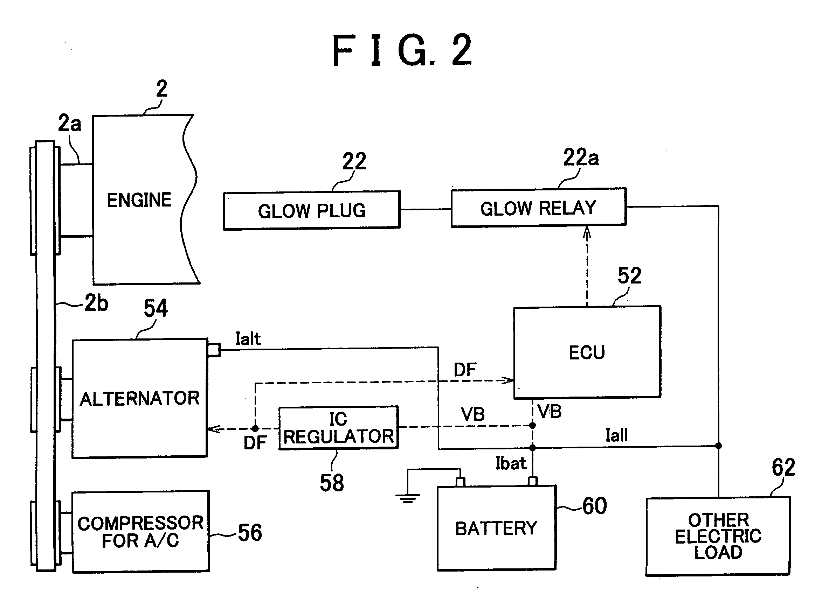

Referring to the block diagram of the power supply system shown in Fig. 2, an alternator 54 and a compressor 56 for the air conditioning unit are operated by a crankshaft 2a of the diesel engine 2 via a belt 2b. The field coil of the alternator 54 receives the field coil power distribution duty DF signal from an IC regulator 58 such that current amount Ialt in accordance with the field coil power distribution duty DF signal is generated so as to be supplied to a battery 60, the glow relay 22a and the other electric load 62.

The IC regulator 58 serves to regulate the field coil power distribution duty DF signal by inputting a signal of the battery voltage VB so as to be converged in an appropriate range. In the case where the battery voltage VB begins falling to increase the discharged current amount to reach an excess range, the IC regulator 58 increases the field coil power distribution duty DF vlaue (%) to increase the ratio of the power distribution by the alternator 54 to the field coil so as to charge the battery 60. In the case where the battery voltage VB begins increasing to allow the charged current amount to reach an excess range, the IC regulator 58 decreases the field coil power distribution duty DF value (%) to decrease the ratio of the power distribution by the alternator 54 to the field coil so as to discharge the battery 60. This makes it possible to hold the charged state of the battery 60 in an appropriate range. The IC regulator 58 does not function until the moment of time immediately after completion of starting the diesel engine 2. For example, the IC regulator 58 is structured to function immediately after completion of starting the diesel engine 2 until passage of the delay time period, and to output the field coil power distribution duty DF signal to the alternator 54.

A glow plug 22 is driven through a glow power distribution control process executed by interruption of the ECU 52 at a predetermined time interval. In the glow power distribution control process, upon detection of ON state of the ignition switch 28, the glow relay 22a is turned ON so as to supply power from the battery 60 to the glow plug 22. This makes it possible to start heating the glow plug 22. When the starter 30 is turned ON, the diesel engine 2 is started. Then upon passage of a delay time after completion of starting the engine, the power supply to the glow plug 22 is stopped. For example, if the cooling water temperature THW becomes relatively high, the delay time is controlled to be reduced.

The ECU 52 executes a routine for controlling the fuel injection quantity by interruption at a predetermined crank angle (at every combustion and expansion stroke). In this control routine, the fuel injection quantity is set in accordance with the engine speed NE and the opening degree of accelerator pedal ACCPF based on a governor pattern. The set quantity is further corrected or limited such that the corrected or limited quantity of the fuel is injected from the injector 4. In an idling state, the fuel injection quantity is feedback controlled so as to establish the target idling speed.

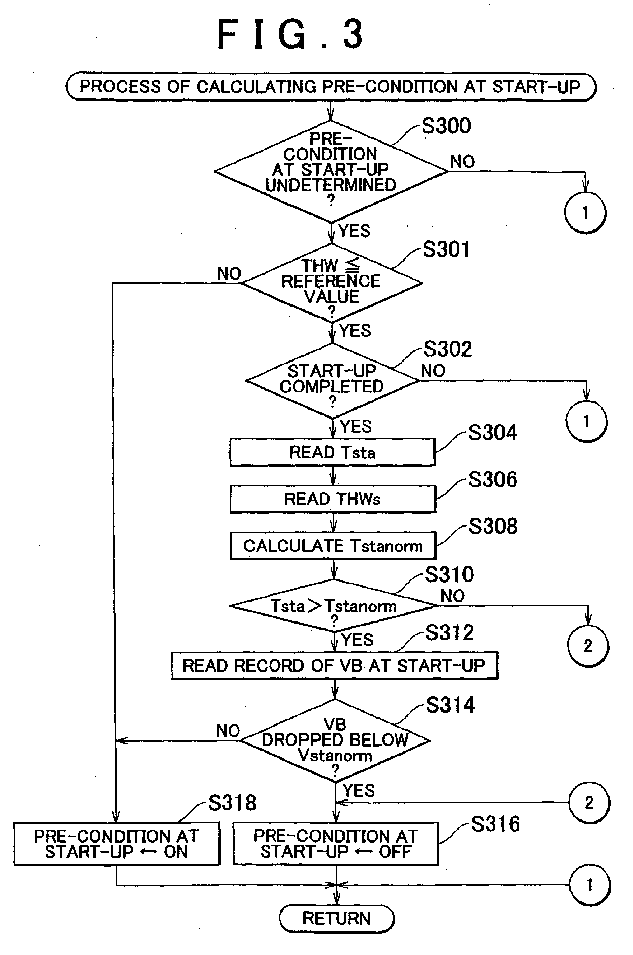

The process for detecting abnormality in power distribution owing to disconnection of the glow plug 22, which is executed by the ECU 52 will be described referring to Figs. 3 to 16. The process for calculating the pre-condition at start-up will be described referring to Fig. 3. This process is repeatedly executed at a predetermined time cycle upon turning ON of the ECU 52. First at the start of this process, it is determined in step S300 whether the pre-condition at start-up has been unestablished. If YES is obtained in step S300, that is, the pre-condition has been unestablished in an initial set state when the power is turned ON, the process proceeds to step S301. In step S301, it is determined whether the cooling water temperature THW detected by the water temperature sensor 32 is equal to or lower than a predetermined value. If the THW is higher than the predetermined value, there is no particular difference in the engine startability between the case where the glow plug 22 is normally heated and the case where the glow plug is not heated owing to the abnormality in power distribution such as disconnection. This may not allow the ECU 52 to execute the process for determining the pre-condition at start-up in steps S304 to S314 accurately. Therefore, NO is obtained in step S301. The process then proceeds to S318 where the pre-condition at start-up is set to ON state. Then the control routine ends. As the pre-condition at start-up is established, determination in step S300 in the subsequent cycle becomes NO. Therefore, the process for calculating the pre-condition at start-up (Fig. 3) ends. Since the pre-condition at start-up is set to ON, the glow abnormality determination where the power distribution to the glow plug 22 (hereinafter referred to as glow power distribution) is forcibly switched to ON/OFF state will be executed.

Meanwhile, if YES is obtained in step S301, that is, THW ≦ predetermined reference value, the process proceeds to step S302 where it is determined whether the start-up has been completed. If NO is obtained in step S302, that is, the start-up has not been completed, this routine ends. The determination in step S302 is kept NO until completion of the start-up. The start-up of the engine is initiated by cranking and the fuel injected from the injector 4 is combusted such that the engine speed NE reaches the value corresponding to the one indicating the completion of the start-up. Then, it is determined that the start-up has been completed.

If YES is obtained in step S302, that is, the start-up has been completed, the process proceeds to step S304 where the start-up time Tsta is read. The start-up time Tsta indicates the time period counted from the beginning to the completion of the start-up through the process executed by the ECU 52.

Then in step S306, the cooling water temperature THWs at beginning of the start-up is read. The THWs is the cooling water temperature that has been detected at the beginning of the start-up and stored in a memory through the processs executed by the ECU 52.

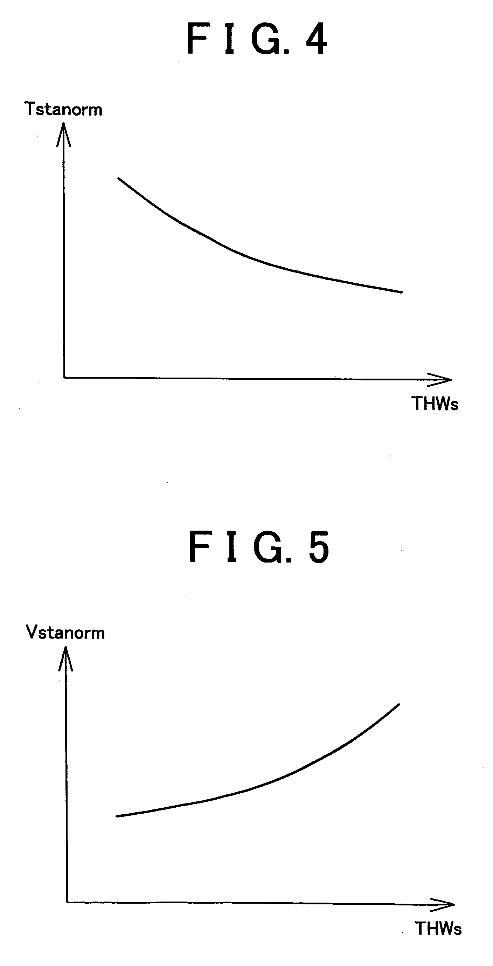

In step S308, a standard start-up time Tstanorm is calculated. The Tstanorm represents the upper limit of the start-up time that is expected when the glow plug 22 is normally heated, or the allowable range from the upper limit. As the Tstanorm varies with the cooling water temperature THWs at start-up, it is calculated in step S308 based on the THWs in reference to the map shown in Fig. 4 stored in the ROM of the ECU 52.

Next in step S310, it is determined whether the actual start-up time Tsta is longer than the normal start-up time Tstanorm. If NO is obtained in step S310, that is, Tsta ≦ Tstanorm, it is considered that the glow plug 22 is normally heated to start the engine smoothly. Then the process proceeds to step S316 where the pre-condition at start-up is set to OFF state so as not to execute the abnormality determination process for forcibly switching ON/OFF operation of the glow plug. The process then ends. Once the pre-condition at start-up is determined, the determination in step S300 in the next cycle becomes NO. As a result, the process for calculating the pre-condition at start-up is terminated. The OFF state of the pre-condition at start-up indicates that there is no possibility of abnormality in the glow power distribution.

Meanwhiel if YES is obtained in step S310, that is, Tsta > Tstanorm, the process proceeds to step S312 where the record of the battery voltage VB upon start-up is read. The battery voltage VB at start-up, that is, from beginning to completion of the start-up is detected through the process executed by the ECU 52. The record indicating the state of the battery voltage VB that drops below the normal minimum voltage VStanorm at start-up which is calculated based on the cooling water temperature THWs at start-up referring to the map shown in Fig. 5 is stored in the memory. The Vstanorm is the voltage indicating the rate of drop in voltage or the allowable range of the drop in voltage, which is expected when the glow plug 22 is normally supplied with electric current and heated.

Then in step S314, it is determined whether the battery voltage VB becomes lower than the Vstanorm upon start-up of the engine based on the aforementioned record. If YES is obtained in step S314, that is, the VB drops below the Vstanorm, it is considered that the glow plug 22 is normally supplied with current and heated. The long start-up time Tsta is considered to have been caused by the factor other than the abnormality in the power distribution to the glow plug.

Accordingly the pre-condition at start-up is set to OFF state in step S316, and the process ends. As the pre-condition at start-up is, thus, established, the determination in step S300 in the next cycle becomes NO. The process for calculating the pre-condition at start-up shown in the flowchart of Fig. 3, thus, is terminated.

Meanwhile, if NO is obtained in step S314, that is, the battery voltage VB is not lower than the VStanorm at start-up, the process proceeds to step S318 where the pre-condition at start-up is set to ON state, and the process ends. As the pre-condition at start-up is established, the determination in step S300 in the next cycle becomes NO. The process for calculating the pre-condition at start-up shown in the flowchart of Fig. 3, thus is terminated.

In the case where the pre-condition at start-up is set to ON state, it is considered that each determination in step S310, that is, YES, and in step S314, that is, NO, has been caused by the other factors. This indicates that there is a possibility of abnormality in the glow power distribution.

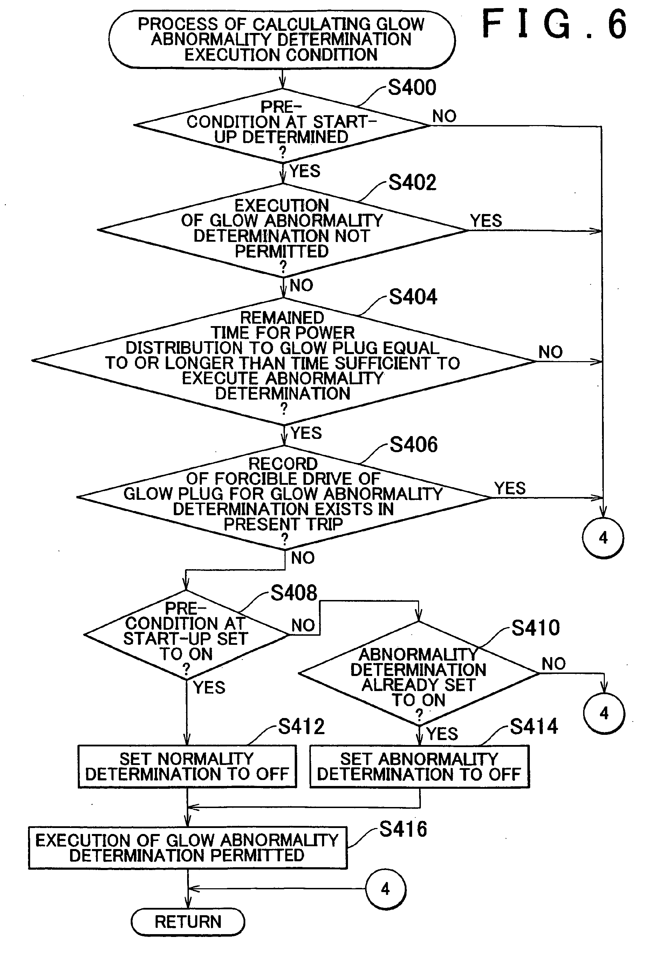

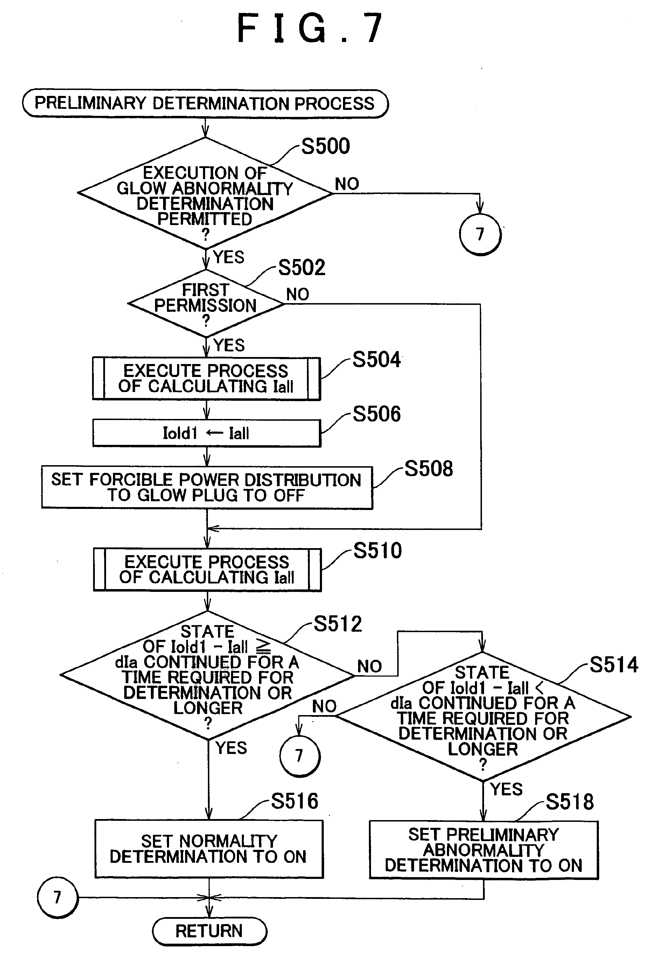

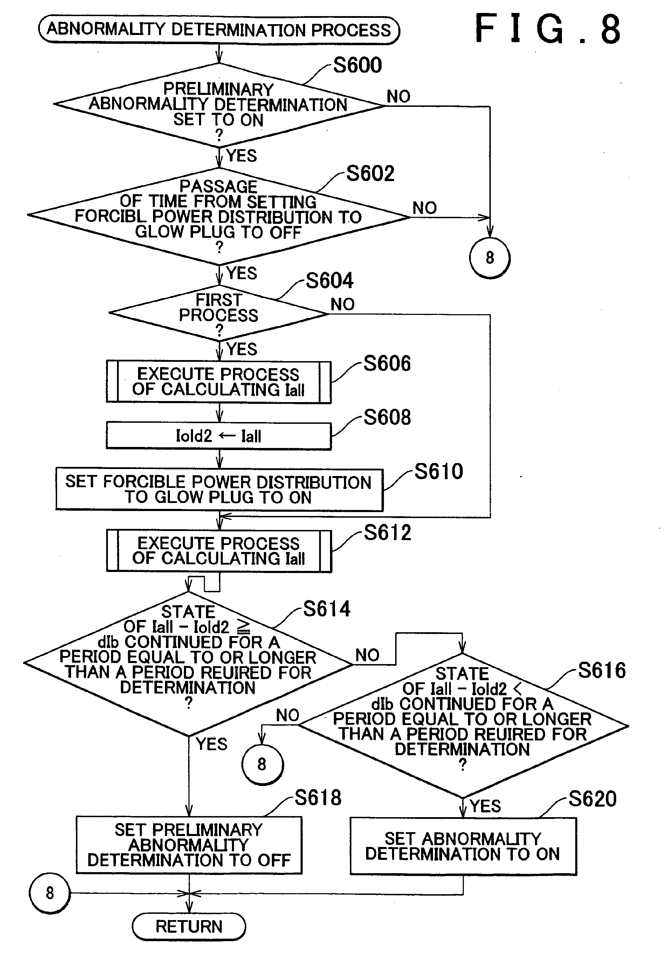

A process for calculating the glow abnormality deemrination execution condition, based on which a preliminary abnormality determination (shown in the flowchart of Fig. 7) and an abnormality determination (shown in the flowchart of Fig. 8) are executed as shown in the flowchart of Fig. 6. Referring to the flowchart of Fig. 6, first in step S400, it is determined whether the pre-condition at start-up has been established through the process for calculating the pre-condition at start-up as shown in the flowchart of Fig. 3. If NO is obtained in step S400, that is, the pre-condition has not been set to ON or OFF, the process ends.

If YES is obtained in step S400, that is, the pre-condition has been set to ON or OFF through the process as shown in the flowchart of Fig. 3, the process proceeds to step S402. In step S402, it is determined whether execution of the glow abnormality determination has been permitted. As the execution of the glow abnormality determination has not been permitted yet at the initial setting upon turning the power ON, NO is obtained in step S402.

Then in step S404, it is determined whether the residual glow power distribution time in the glow power distribution control process is equal to or longer than a predetermined time that allows execution of abnormality detemrination. The predetermined time indicates the time required for detecting the operation state of the engine by forcibly setting the glow power distribution to OFF state through two types of abnormality determination processes (to be described later referring to Figs. 7, 8 and 9) and for detecting the change in the engine operating state by returning the glow power distribution to ON state.

If NO is obtained in step S404, that is, the residual time is shorter than the predetermined time, the process ends. Therefore, the abnormality determination process to be described later (see Figs. 7, 8, and 9) is not executed in the present trip.

If YES is obtained in step S404, that is, the residual time is equal to or longer than the predetermined time, the process proceeds to step S406. In step S406, it is determined whether there is a record of execution of a forcible switching operation of the glow power distribution through the abnormality determination process (see Figs. 7, 8, and 9) in the present trip. In a single trip, execution of the abnormality determination process (Figs. 7, 8, and 9) is allowed only once, and switching operation of the glow relay 22a is minimized so as to prevent deterioration in durability of the glow relay 22a.

If YES is obtained in step S406, that is, the abnormality determination process (Figs. 7, 8, and 9) has been executed in the current trip, it is considered that the same process is not executed again. Therefore, the routine ends.

If NO is obtained in step S406, that is, it is determined that there is no record of execution of the control for forcibly switching the power distribution, the process proceeds to step S408. In step S408, it is determined whether the pre-condition at start-up has been set to ON state. If NO is obtained in step S408, that is, the pre-condition has been already set to OFF state, the process proceeds to step S410 where it is determined whether the abnormality determination has been set to ON in the previous trip stored in the ECU 52. If NO is obtained in step S410, that is, the determination of the valid abnormality determination has been set to ON state, the routine ends.

If YES is obtained in step S410, that is, the abnormality determination process has been set to ON state in the previous trip, the determination is returned to OFF state in step S414. The process proceeds to step S416 where execution of the glow abnormality determination is permitted.

If YES is obtained in step S408, that is, the pre-condition at start-up has been set to ON state, a normality determination is set to OFF state in step S412, and execution of the glow abnormality determination is permitted in step S416. More specifically, YES is obtained in step S408 when determination in step S314 becomes NO indicating that there is a possibility of abnormality through the aforementioned process for calculating the pre-condition at start-up as shown in the flowchart of Fig. 3, or when determination in step S301 becomes NO indicating that the abnormality determination itself has not been successful. Therefore, the abnormality has to be determined by executing the abnormality determination process as shown in Figs. 7, 8, and 9 to be described later.

If YES is obtained in step S410, there is a possibility that the glow plug has been already fixed as the abnormality in the power distribution to the glow plug is determined in the previous trip. Therefore, even if it is determined that there is no possibility of abnormality in step S316 through the process for calculating the pre-condition at start-up as shown in the flowchart of Fig. 3, the abnormality determination process (Figs. 7, 8, and 9) are executed so as to store the information whether the abnormality in the glow power distribution has been fixed or not.

The abnormality determination process (Figs. 7, 8, 9) for forcibly switching the glow power distribution will be described. Figs. 7, 8, and 9 show the preliminary abnormality determination process, the abnormality determination process, and the process for calculating the current amount consumed by the load, respectively. Each of those processes is repeatedly executed at a predetermined time cycle.

When the preliminary abnormality determination process (Fig. 7) is started, it is determined in step S500 whether the glow abnormality determination process has been permitted in step S416 of the process for calculating the glow abnormality deemrination execution condition. If NO is obtained in step S500, that is, execution of the glow abnormality determination has not been permitted, no further process is executed.

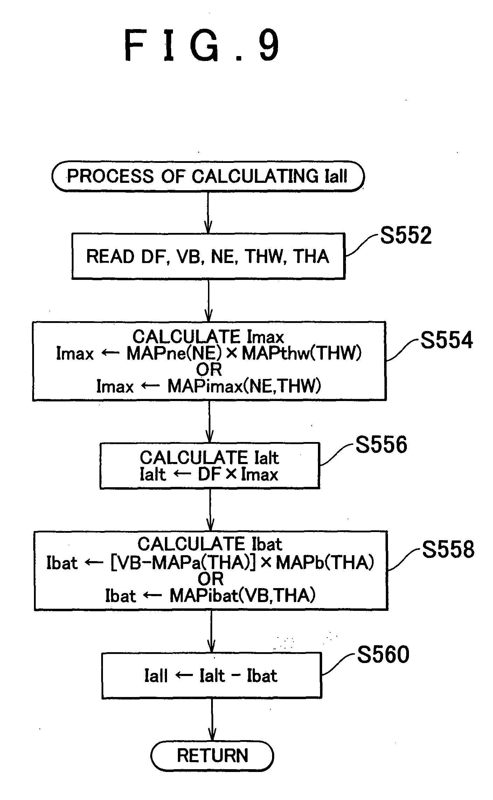

If YES is obtained in step S500, that is, execution of the glow abnormality determination process has been permitted, the process proceeds to step S502 where it is determined whether it is the first process since execution of the glow abnormality determination process is permitted. If YES is obtained in step S502, the process proceeds to step S504 where a current amount consumed by load Iall is calculated. The process for calculating the current amount consumed by the load is shown by the flowchart of Fig. 9.

The process for calculating the current amount consumed by the load Iall will be described referring to Fig. 9. Upon start of the process, the detected values of the field coil power distribution duty DF, the battery voltage VB, the engine speed NE, the cooling water temperature THW, and the intake air temperature THA are read into the work area in the RAM of the ECU 52 in step S552.

Then in step S554, the value of the total load current value Imax of the alternator 54 is calculated based on the engine speed NE and the cooling water temperature THW. The Imax represents the generated current amount obtained when the field coil power distribution duty DF is equal to 100 % .

For example, the Imax can be calculated using the equation 1 as follows.
Equation (1):

$$Imax \leftarrow Mapne(NE) \times MAPthw(THW) \qquad (1)$$

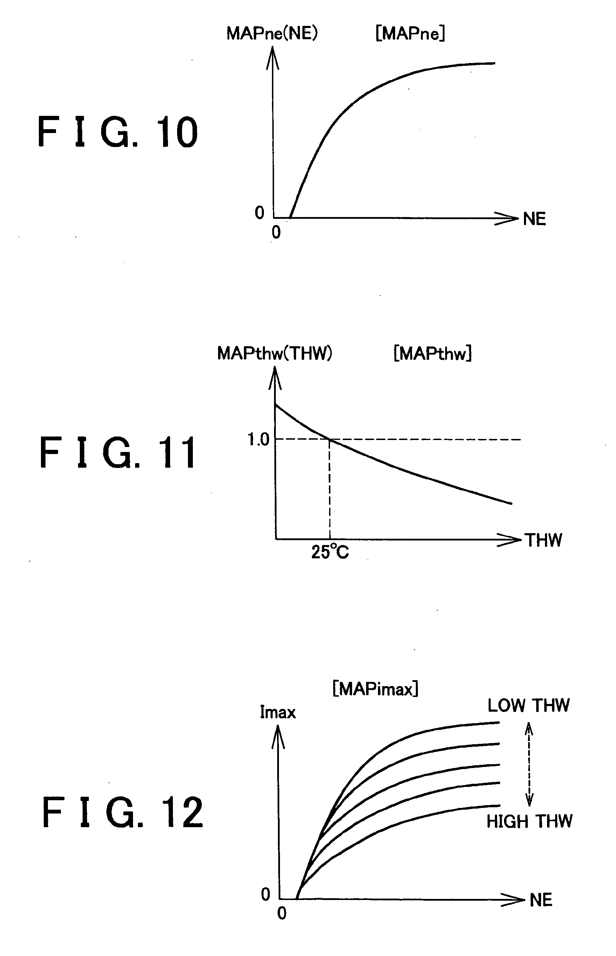

where Mapne(NE) is the value derived from the map Mane indicating the generated current amount output from the alternator 54 corresponding to the engine speed NE under the condition where the field coil power distribution duty DF is equal to 100% at the constant temperature (for example, 25°C). The map MAPne as shown in Fig. 10 is experimentally obtained preliminarily. The higher the engine speed NE becomes, the larger the map value Mane (NE) becomes. The engine speed NE is proportional to the rotational speed of the alternator 54. Accordingly the map MAPne substantially serves as the map indicating the generated current amount of the alternator 54 corresponding to the rotational speed thereof. The generated current amount can be calculated by using the engine speed NE in place of the rotational speed of the alternator 54.

The MAPthw (THW) indicates the temperature correction coefficient which is derived from the map MAPthw representing the temperature correction coefficient corresponding to the cooling water temperature THW. Referring to Fig. 11 showing the experimentally obtained MAPthw, the higher the THW becomes, the smaller the MAPthw becomes. As the diesel engine 2 is provided with the alternator 54, the temperature of the alternator 54 is substantially the same as that of the engine 2. Although detection of the temperature of the alternator 54 may provide more accurate information, the cooling water temperature THW for the diesel engine 2 can be used to calculate the temperature correction coefficient in place of the temperature of the alternator 54 without being provided with the temperature sensor.

In step S554 of the flowchart shown in Fig. 9, the total load current value Imax may be obtained using the equation (2) as follows in place of the aforementioned equation (1).
Equation (2)

$$Imax \leftarrow MAPimax (NE,THW) \qquad (2)$$

where MAPimax(NE,THW) indicates the value derived from the map MAPinax representing the total load current value Imax corresponding to the engine speed NE and the cooling water temperature THW at the field coil power distribution duty DF = 100%. Referring to the experimentally obtained MAPinax shown in Fig. 12, the higher the engine speed becomes, the larger the map value MAPimax(NE, THW) becomes, and the higher the cooling water temperature THW becomes, the smaller the map MAPimax (NE, THW) becomes.

In step S556, the generated current amount Ialt is calculated by multiplying the field coil power distribution duty DF by the Imax using the equation (3) as follows:
Equation (3)

$$Ialt \leftarrow DF \times Imax \qquad (3)$$

As a result, the charged/discharged current amount of the battery Ibat is calculated using the equation (4) in step S558.
Equation (4)

$$1bat \leftarrow [VB - MAPa(THA)] \times MAPb(THA) \qquad (4)$$

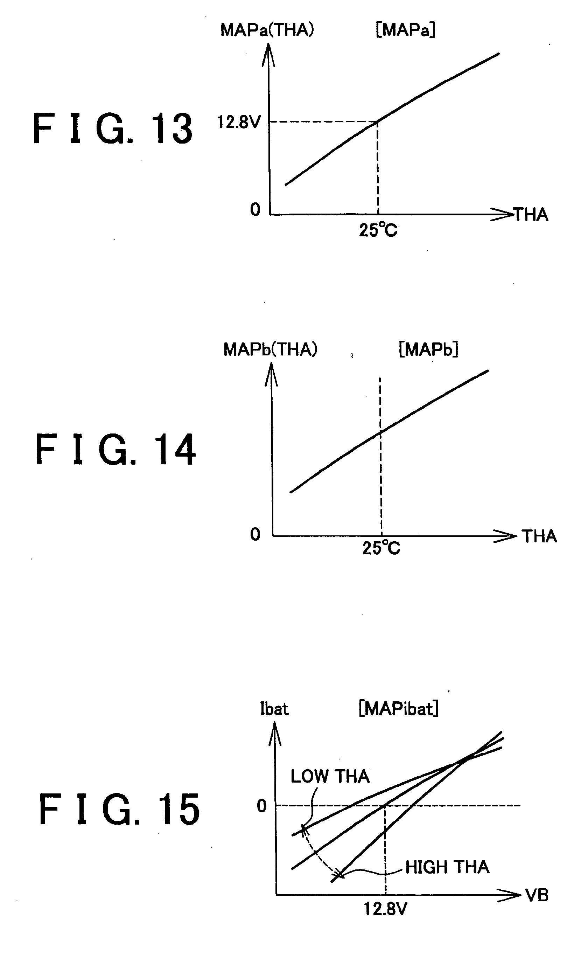

where MAPa(THA) represents the value derived from the map MAPa indicating the electromotive force of the battery 60 at the intake air temperature THA in place of the battery temperature. Referring to the experimentally obtained map MAPa as shown in Fig. 13, the higher the THA becomes, the larger the map value MAPa(THA) becomes. As the battery 60 provided in the engine room is exposed to outside air that is the same as the intake air admitted into the diesel engine 2, the intake air temperature THA may be used in place of the battery temperature.

The MAPb(THA) is the correction coefficient representing the charging/discharging characteristics of the battery 60 that vary with the battery temperature. Such value is derived from the map MAPb using the intake air temperature THA in place of the battery temperature. Referring to the experimentally obtained map MAPb shown in Fig. 14, the higher the THA becomes, the larger the map value MAPb(THA) becomes.

The right side of the equation (4), that is, MAPa(THA) - VB represents the difference between the electromotive force MAPa(THA) and the actually measured battery voltage VB. If VB - MAPaK(THA) < 0, this means that the battery 60 is in a discharged state. If VB - MAPa(THA) > 0, this means that the battery 60 is in a charged state. If VB - MAPa(THA) = 0, this means that the battery is not charged nor discharged. Therefore Ibat < 0 means the discharged state, Ibat > 0 means the charged state, and Ibat= 0 means non-charged/discharged state.

In step S558 of the flowchart shown in Fig. 9, the charged/discharged current amount Ibat may be calculated using the equation (5) below in place of the equation (4).
Equation (5)

$$Ibat \leftarrow MAPIbat(VB, THA) \qquad (5)$$

where MAPIbat(VB, THA) represents the value calculated by the map MAPibat indicating the charged/discharged current amount of the battery Ibat corresponding to the battery voltage VB and the intake air temperature THA. Referring to the experimentally obtained map MAPibat shown in Fig. 15, the higher the battery voltage VB becomes, the larger the map value MAPibat(VB,THA) becomes, and the higher the intake air temperature THA becomes, the larger the gradient (change ratio) of the map value MAPibat(VB,THA) becomes.

The current amount consumed by the load Iall is calculated in step S560 using the above obtained generated current amount Ialt and the charged/discharged current amount Ibat through an equation (6) as follows:
Equation (6)

$$Iall \leftarrow Ialt - That \qquad (6)$$

The Iall can be derived from the generated current amount Ialt and the charged/discharged current amount Ibat without the need of providing the current sensor.

Referring back to the flowchart of Fig. 7, when the present value of thecurrent amount consumed by the load Iall is calculated in step S504 referring to Fig. 9, the Iall is stored in the RAM as a current amount consumed by the load just before switching the power distribution to the glow plug to OFF state, that is, Iold1, in step S506.

Then in step S508, the glow power distribution that has been continued immediately from turning ON of the ignition switch is forcibly stopped by turning the glow relay 22a OFF. Normally this may cause the current amount consumed by the load Iall to drop by the amount assumed to be obtained if the glow power distribution is continued.

The process proceeds to step S510 where the Iall is calculated by executing the process for calculating the current amount consumed by the load (see Fig. 9) so as to determine whether the Iall normally drops.

In step S512, it is determined whether the state where the Iall establishes the following equation (7) is continued for a time period sufficient to determine the drop in the Iall.
Equation (7)

$$Iold1 - Iall \geqq dIa \qquad (7)$$

where dIa based on which the drop in the Iall is determined is set based on the minimum value of the current amount consumed by the glow polug 22, which has been experimentally obtained.

If NO is obtained in step S512, that is, the Iall fails to establish the equation (7) or the established state does not last for a time period long enough to determine the drop in the Iall, the process proceeds to step S514. In step S514, the state where the following equation (8) is established is continued for a time period sufficient to determine whether there is no change in the Iall.
Equation (8)

$$Iold1 - Iall < dIa \qquad (8)$$

The above equation (8) represents the state where the equation (7) is not established.

If NO is obtained in step S514, that is, the equation (8) is not established or the established state does not last for the time period required for determining whether there is no change in the Iall, the process ends.

If YES is obtained in step S512, that is, the established state of the equation (7) is continued for the time period required for determining the drop in the Iall, the normality determination is set to ON in step S516. The aforementioned state indicates that the glow power distribution has been normally performed at least at the moment just before stopping the glow power distribution in step S508, and the glow power distribution is turned OFF in step S508 by the ECU 52. The information containing the normality determination set to ON is stored in the back-up RAM in the ECU 52. The process then ends.

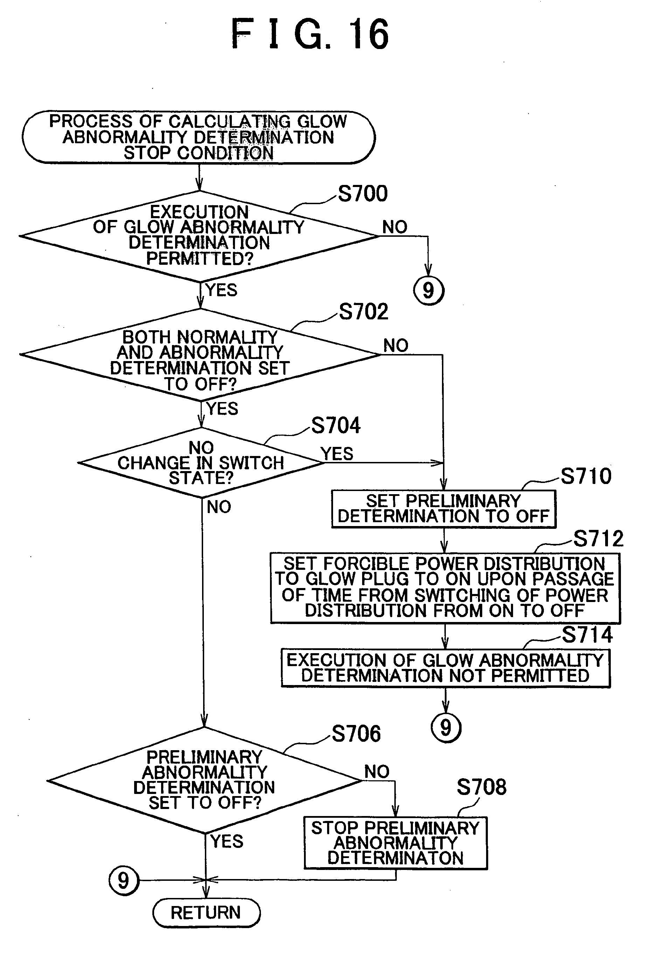

When the normality determination is set to ON state in step S516, the process for calculating glow abnormality determination stop condition of the flowchart shown in Fig. 16 (described later) sets the glow power distribution to ON state again. The abnormality determination process shown in the flowchart of Fig. 8 is not executed.

If NO is obtained in step S512, and then YES is obtained in step S514, that is, the established state of the equation (8) is continued for the time period required for determining whether there is no change in the Iall, the process proceeds to step S518 where the preliminary abnormality determination is set to ON state. The above state indicates that the glow power distribution is not normally set to ON at the moment just before setting the glow power distribution to OFF state in step S508, or the glow power distribution is not set to OFF by the ECU 52 in step S508. The primarily abnormality determination is set to ON state and stored in the backup RAM within the ECU 52. The process then ends. When the preliminary abnormality determination is set to ON state, the process for calculating the glow abnormality determination stop condition as shown in the flowchart of Fig. 16 stops the temporary abnormality determination process (Fig. 7), and the abnormality determination process is executed.

The abnormality determination process will be described referring to a flowchart of Fig. 8. This process is repeatedly executed at a predetermined cycle. First in step S600, it is determined whether the preliminary abnormality determination is set to ON state. The preliminary abnormality determination has been initially set to OFF state until it is set to ON. Therefore, NO is obtained in step S600, and the control routine ends, executing no further process.

If YES is obtained in step S600, that is, the preliminary abnormality determination is set to ON in the preliminary abnormality determination process (Fig. 7), the process proceeds to step S602. In step S602, it is determined whether the time passes from forcible setting of the glow power distribution to OFF state in step S508 of the control routine as shown in the flowchart of Fig. 7. The aforementioned time is set to prevent the ON/OFF switching operation of the glow relay 22a for a short period so as to avoid deterioration in the durability thereof. This time varies depending on the type of the glow relay 22a and the current amount. However, it may be set to about 100 msec.

If NO is obtained in step S602, that is, the time has not been passed, the control routine ends, executing no further process for determining the abnormality. If YES is obtained in step S602, that is, the time period has been passed, the process proceeds to step S604 where it is determined whether it is the first process to be executed after YES is obtained in step S602. If YES is obtained in step S604, that is, it is the first process, the process proceeds to step S606 where the current amount consumed by the load Iall is calculated by executing the process for calculating the current amount consumed by the load as shown by Fig. 9. Then the process proceeds to step S608 where the calculated Iall is stored in the RAM as the current amount consumed by the load, that is, Iold2, at the moment just before setting the glow power distribution to ON state.

The process further proceeds to step S610 where the glow power distribution, which has been forcibly switched to OFF state in step S508 of the preliminary abnormality determination process (Fig. 7) is forcibly switched to ON state by turning the glow relay 22a ON. This may normally cause the current amount consumed by the load Iall to be increased corresponding to the amount of current supplied by the glow power distribution.

Then in step S612, the current amount consumed by the load Iall is calculated by executing the process for calculating the current amount consumed by the load (Fig. 9) so as to determine whether the Iall is increased normally.

The process proceeds to step S614 where it is determined whether the state in which the resultant Iall establishes the following equation (9) is continued for the time period required for determiming the increase in the Iall.

Equation (9)

$$Iall - Iold2 \geqq dIb \qquad (9)$$

The dIb is set based on the minimum value of the current amount consumed by the glow plug 22, which has been experimentally obtained.

If NO is obtained in step S614, that is, the equation (9) is not established, or the established state is not continued for the period required for determining the increase in the Iall, the process proceeds to step S616. In step S616, it is determined whether an established state of the following equation (10) is continued for the time period required for determiming an unchanged state of the Iall.

Equation (10)

$$Iall - Iold2 < dIb \qquad (10)$$

This equation (10) represents that the equation (9) is not established.

If NO is obtained in step S616, that is, the equation (10) is not established or the established state is not continued for the time period required for determining the unchanged state of the Iall, the control routine ends.

If YES is obtained in step S614, that is, the established state of the equation (9) is continued for the time period required for determining the increase in the Iall, the preliminary abnormality determination is set to OFF in step S618. The state where YES is obtained in step S614 indicates that the glow power distribution has been stopped at least at the moment just before forcibly switching the glow power distribution to ON state, and therefore the glow power distribution is switched to ON state by the ECU 52 in step S610. The information of the OFF state of the preliminary abnoamrlity determination is stored in the back-up RAM in the ECU 52. The control routine, then ends.

As a result, the preliminary abnormality determination is held in OFF state in the subsequent control cycle, that is, NO is obtained in step S600. The abnormality determination process is terminated. As the glow power distribution is returned to ON state, the glow power distribution is continued for the rest of time in the process for controlling the glow power distribution, which is started by turning the ignition switch ON.

If YES is obtained in step S616, that is, NO is obtained in step S614 and the established state of the equation (10) is continued for the time period required for determining the unchanged state of the Iall, the process proceeds to step S620 where the abnormality determination is set to ON state. As both determinations in the preliminary abnormality determination process (Fig. 7) and the abnormality determination process (Fig. 8) are set to ON, there is a high possibility of abnormality in the glow power distribution. The information containing the abnormality determination set to ON is stored in the back-up RAM in the ECU 52. The control routine, then ends. As the abnormality determination is set to ON state, the preliminary abnormality determination is set to OFF in step S600 in the process for calculating the glow abnormality determination stop condition (Fig. 16). The abnormality determination process (Fig. 8), thus, is stopped.

The process for calculating the glow abnormality determination stop condition will be described referring to Fig. 16. This process is repeatedly executed at a predetermined cycle for stopping the preliminary abnormality determination process (Fig. 7) and the abnormality determination process (Fig. 8) as described above.

First in step S700, it is determined whether execution of the glow abnormality determination in step S416 of the process for calculating the glow abnormality determination execution condition has been permitted. If NO is obtained in step S700, tha is, execution of the glow abnormality determination has not been permitted, the control routine ends without executing the process substantially.

If YES is obtained in step S700 where execution of the glow abnormality determination has been permitted, the process proceeds to step S702 where it is determined whether the normal determination and the abnormality determination are set to OFF. If YES is obtained in step S702, that is, both determinations are set to OFF, the process proceeds to step S704 where it is determined whether there is a change in each switch of various devices of the electric load 62, for example, a switch 50 for an air conditioning unit, an electric heater switch, a tail lamp switch, defogger switch, braking signal switch and the like. If it is determined that there is the change in each state of those switches, that is, switching the air conditioning unit ON/OFF, electric heater ON/OFF, or the lamp switch ON/OFF, the current amount consumed by the load Iall varies. Accordingly it is difficult to distinguish the fluctuation in the Iall owing to the change in the switches from the fluctuation owing to the ON/OFF switching operation of the glow power distribution. Therefore, the determination is executed in order to prevent mis-determination in the preliminary abnormality determination process (Fig. 7) and the abnormality determination process (Fig. 8).

If NO is obtained in step S704, that is, there is no change in operations of the switches, the process proceeds to step S706 where it is determined whether the preliminary abnormality determination is set to OFF state. If YES is obtained in step S706, that is, the normality determination is set to OFF under the preliminary abnormality determination process (Fig. 7), and the preliminary abnormality determination is set to OFF state, the control routine ends.

If NO is obtained in step S702 and YES is obtained in step S704, the process proceeds to step S710 where the preliminary abnormality determination is set to OFF state. In the abnormality determination process (Fig. 8), NO is obtained in step S600. If the abnormality determination process (Fig. 8) has been executed, such process is no longer executed.

The process further proceeds to step S712 where the process for forcibly switching the glow power distribution to ON state is executed after passage of a predetermined time period upon switching of the glow power distribution from ON to OFF state. This process is executed in the case where the glow power distribution to the glow plug is switched from ON to OFF state in step S508 of the preliminary abnormality determination process (Fig. 7).

In the forcible glow power distribution ON process, if the predetermined period has passed at a point when the process in step S712 is executed, the glow power distribution is immediately performed. If the predetermined period has not passed at the point when the process in step S712 is executed, the glow power distribution is performed after passage of the predetermined period. If the glow power distribution is forcibly performed in step S610 of the abnormality determination process (Fig. 8), the state of the glow power distribution is maintained.

The predetermined period has the same length of time as that of the predetermined period as described in the process in step S602 of the abnormality determination process (Fig. 8) so as to avoid deterioration in durability of the glow relay 22a.

In step S714, execution of the glow abnormality determination is not permitted, and the control routine ends. As NO is obtained in step S700 at the next control cycle, the process for calculating the glow abnormality determination stop condition is not executed. Likewise, NO is obtained in step S500 even if the preliminary abnormality determination process (Fig. 7) is executed. The substantial process for such control, thus, is not executed.

NO is obtained in step S702 in the case where normality determination is set to ON state after execution of step S516 of the preliminary abnormality determination process (Fig. 7), or abnormality determination is set to ON state after execution of step S620 of the abnormality determination control (Fig. 8).

If NO is obtained in step as706, that is, the preliminary determination is set to ON state after execution of step S518 of the preliminary abnormality determination process (Fig. 7), execution of the process is stopped in step S708.

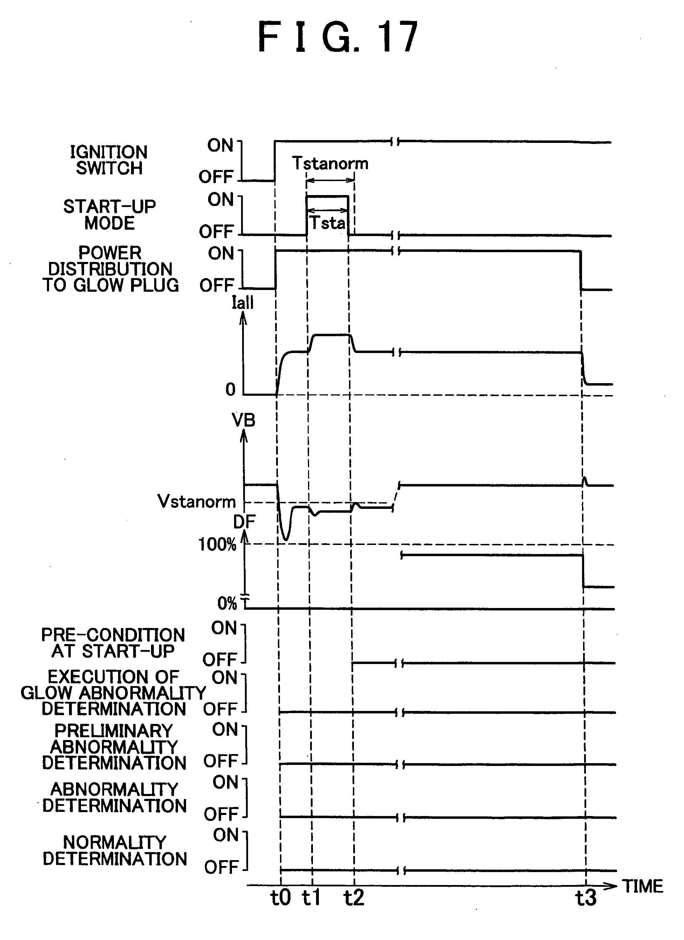

An example of the aforementioned process is shown in the form of timing charts of Figs. 17 to 21. Fig. 17 is the timing chart in the case where the pre-condition at start-up is set to OFF state. In this case, the ignition switch 28 is switched to ON at a time point t0, setting the glow power distribution to ON state immediately. At a time point t1, a starter permission is displayed by an indicator lamp so as to be seen by a vehicle operator. Then the vehicle operator operates the starter 30 ON to start the start-up mode. The engine speed NE is increased to the value indicating the completion of start-up, and the ECU 52 determines the completion of start-up at a time point t2. The actual start-up time Tsta (t1 - t2) is equal to or shorter than a normal start-up time period Tstanorm. The example of Fig. 17 shows the record of the battery voltage VB that drops below the normal minimum voltage at start-up Vstanorm.

Accordingly upon completion of the start-up, NO is obtained in step S310 of the process for calculating the pre-condition at start-up (Fig. 3), and the pre-condition is set to OFF in step S316. The preliminary abnormality determination process (Fig. 7) nor the abnormality determination process (Fig. 8) is not executed. The ON state of the glow power distribution is maintained. When the time period for power distribution set under the normal glow power distribution control expires at a time point t3, the glow power distribution is set to OFF state. The IC regulator 58 is structured to start outputting the field coil power distribution duty DF after passage of the delay time period followed by start-up of the diesel engine.

The pre-condition at start-up set to OFF, the abnormality determination set to OFF, and the normal determination set to OFF are stored in the memory of the ECU 52 as the inner information such as a diagnosis.

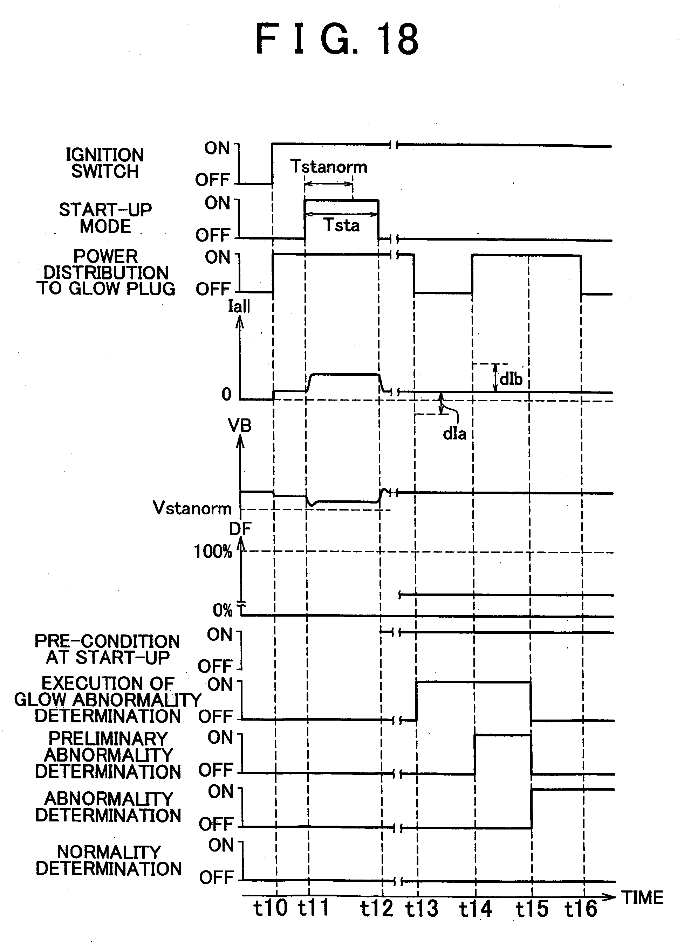

Fig. 18 is a timing chart in the case where electric current is not applied to the glow plug 22 owing to disconnection even if the glow power distribution is set to ON. At a time point t10, the ignition switch is operated to ON, the starter 30 is driven in response to the permission at a time point t11, and the engine start-up is completed at a time point t12. In this case, the actual start-up time period Tsta becomes longer than the normal start-up time Tstanorm. There is no record indicating that the VB drops below the normal start-up time Tstanorm. Then YES is obtained in step S310 and NO is obtained in step S314 of the process for calculating pre-condition at start-up (Fig. 3). The pre-condition is set to ON state in step S318. This leads to execution of the process for calculating glow abnormality determination execution condition (Fig. 6). When execution of glow abnormality determination is permitted in step S416, the preliminary abnormality determination process (Fig. 7) is executed at a time point t13. This may cause the glow power distribution to be forcibly set to OFF state. According to the timing chart of Fig. 18, the change in the Iall is below the reference value dIa, i.e., YES is obtained in step S514, immediately after forcibly setting the glow power distribution to OFF. Accordingly the preliminary abnormality determination is set to ON state in step S518 at a time point t14. Then the preliminary abnormality determination process (Fig. 7) is stopped by executing step S708 of the process for calculating glow abnormality determination stop condition (Fig. 16). The abnormality determination process (Fig. 8) starts to forcibly set the glow power distribution to ON in step S610. According to the timing chart of Fig. 18, as the increase in the Iall is below the reference value dIb during the period waiting for the determination immediately after forcibly setting glow power distribution to ON state, i.e., YES is obtained in step S616, the abnormality determination is set to ON in step S620 at a time point t15. In step S702 of the process for calculating glow abnormality determination stop condition (Fig. 16), NO is obtained. Therefore the preliminary abnormality determination is set to OFF in step S710, and execution of glow abnormality determination is not permitted in step S714. As the forcible glow power distribution has been already set to ON, the process for maintaining ON state is executed in step S712.

Upon expiration of the time period for the power distribution set under the normal glow power distribution control at a time point t16, the glow power distribution is set to OFF. As a result, the pre-condition at start-up set to ON, the abnormality determination set to ON, and the normality determination set to OFF are stored in the memory of the ECU 52.

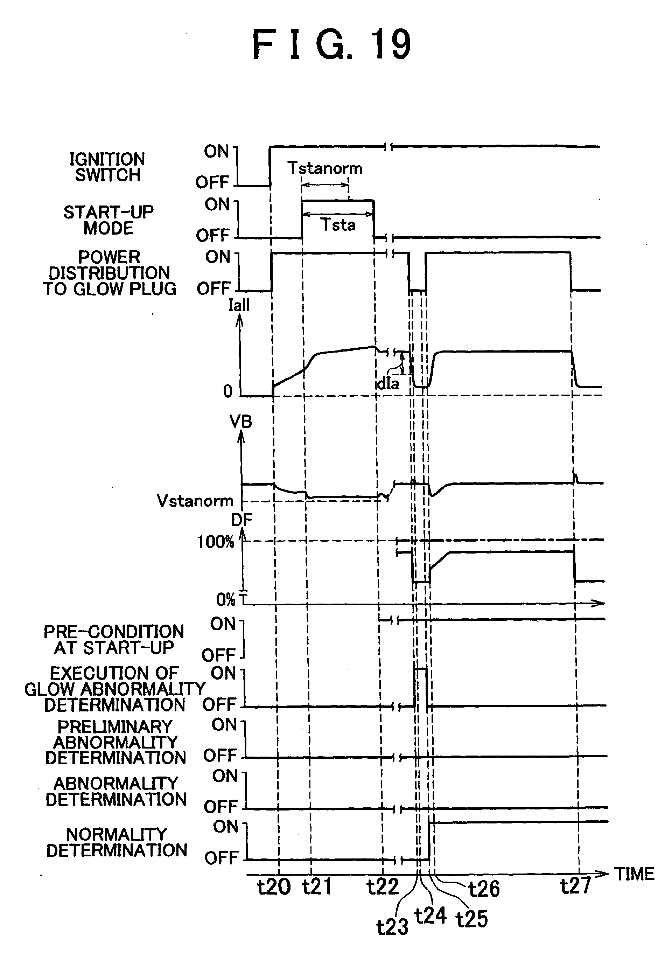

Fig. 19 is a timing chart representing an example in the case where the preliminary abnormality determination process (Fig. 7) determined as being normal. The ignition switch 28 is set to ON at a time point t20, the starter 30 is driven upon permisstion of operation at a time point t21, and start-up of the engine is completed at a time point t22. The actual start-up time period Tsta is longer than the normal start-up time Tstanorm, and there is no record indicating that the battery voltage VB drops below the normal minimum voltage at start-up Vstanorm. In step S310 of the process for calculating pre-condition at start-up (Fig. 3), YES is obtained, and in step S314, NO is obtained. Accordingly the pre-condition is set to ON in step S318. Then the process for calculating glow abnormality determination execution condition (Fig. 6) is executed. When execution of the glow abnormality determination is permitted in step S416, the preliminary abnormality determination process (Fig. 7) is executed at a time point t23. This may cause the glow power distribution to be forcibly set to OFF state in step S508. At this moment, the decrease in the Iall becomes equal to or larger than the reference value dIa at a time point t24, and such state lasts for the period required for making the determination from the time point t24 to the time point t25. As a result, YES is obtained in step S512.

In step S516, the normality determination is set to ON. The preliminary abnormality determination is maintained in OFF state in step S710 (Fig. 16), and execution of glow abnormality determination is not permitted in step S714. The preliminary abnormality determination process (Fig. 7) then ends. Execution of step S712 may return the glow power distribution to ON state after a predetermined passage of time from execution of step S508, that is, forcible setting of the glow power distribution to OFF state at a time point t26. As a result, the abnormality determination process (Fig. 8) is not executed. When the time for power distribution set under the normal glow power distribution control expires at a time point t27, the glow power distribution is set to OFF state. The pre-condition at start-up set to ON, the abnormality determination set to OFF, and the normality determination set to ON are stored in the memory of the ECU 52.

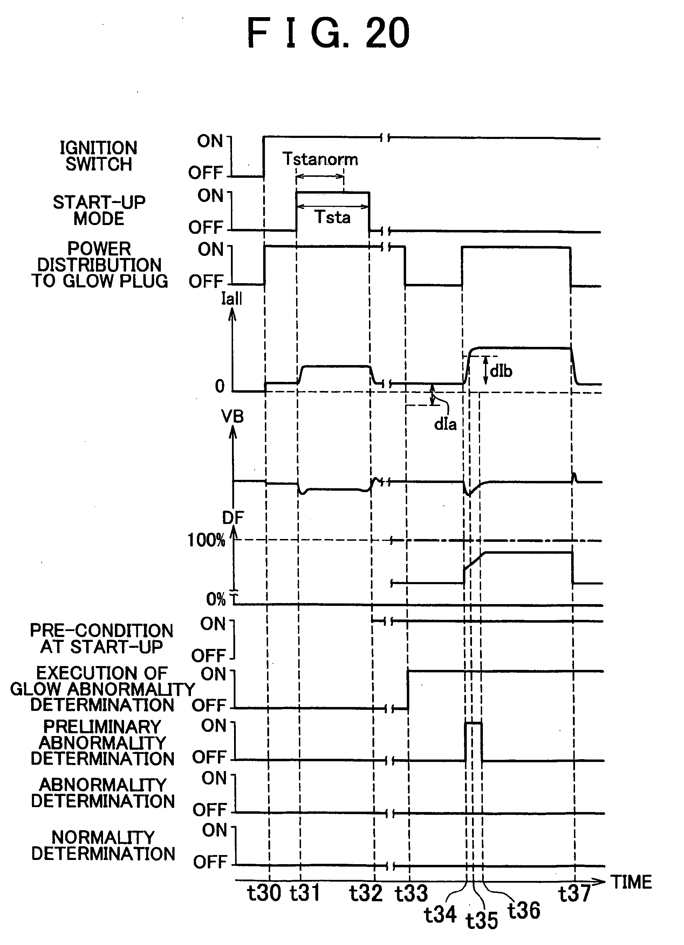

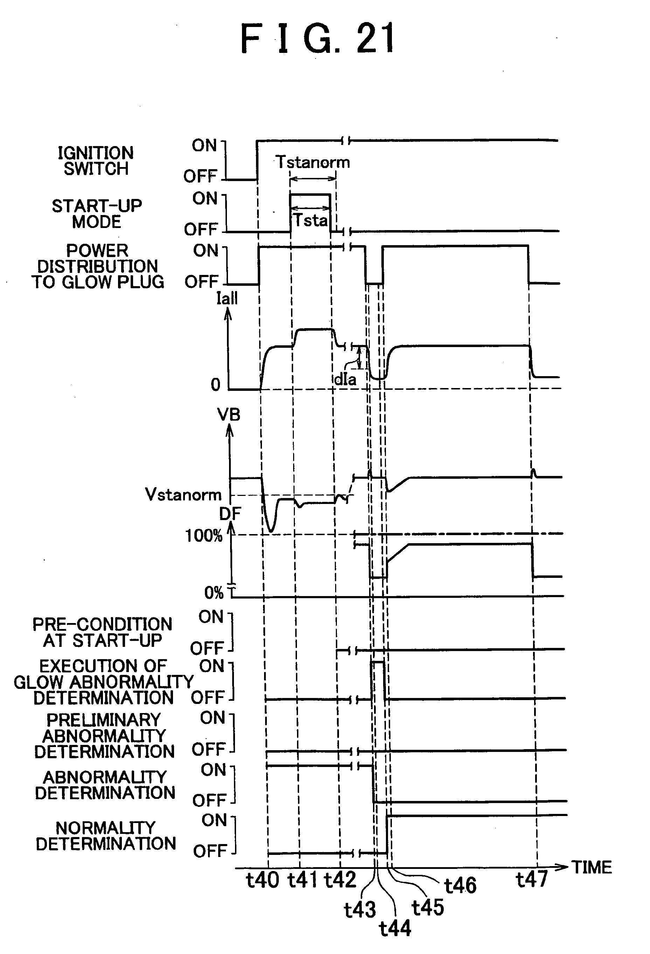

As the battery voltage VB is prevented from increasing owing to the function of the IC regulator 58, the change in the battery voltage VB cannot be accurately obtained at a moment when the glow power distribution is forcibly set to OFF. As shown in the drawing, the IC regulator 58 serves to increase the field coil power distribution duty DF gradually rather than sharply. The aforementioned characteristic of the IC regulator 58, however, widely varies dependint on a certain condition. This may fail to detect the decrease in the battery voltage VB accurately when the battery voltage VB drops. This may apply to examples as shown in Figs. 20 and 21.

Referring to a solid line of the timing chart of Fig. 19, as the field coil power distribution duty DF does not reach 100 % , the ON/OFF switching operation of the glow power distribution affects the field coil power distribution duty DF. Referring to a chain line of the timing chart, the ON/OFF switching operation of the glow power distribution hardly affects the field coil power distribution duty DF that is held 100% by the battery voltage VB or power consumption state of other electric load 62. This may fail to detect the change in the field coil power distribution duty DF accurately, which applies to examples as shown in Figs. 20 and 21. Therefore, the field coil power distribution duty DF is not sufficient to accurately detect the change, which may apply to Figs. 20 and 21.

The timing chart of Fig. 20 shows the timing chart in the case where sufficient change in the battery voltage and the fuel injection quantity can be obtained by forcibly setting the glow power distribution to ON state under the abnormality determination process (Fig. 8) after failing to obtain sufficient change in the fuel injection quantity and the battery voltage obtained by forcibly setting the glow power distribution to OFF state under the preliminary abnormality determination process (Fig. 7). The change of the timing chart of Fig. 20 from the time points t30 to t34 are the same as that from the time points t10 to t14 of the timing chart of Fig. 18. Then at a time point t34, the glow power distribution is forcibly set to ON state under the abnormality determination process (Fig. 8). At this moment, in the timing chart of Fig. 20, there is an increase in the Iall, which is equal to or larger than the reference value dIb at a time point t35, and this state is continued for a period required for the determination from the time points t35 to t36, that is, YES is obtained in step S614. Then the preliminary abnormality determination is returned to OFF in step S618 at the time point t36. Upon expiration of the power distribution time period set under the normal glow power distribution control at a time point t37, the glow power distribution is set to OFF. The pre-condition at start-up set to ON, the abnormality determination set to OFF, and the normality determination set to OFF are stored in the memory of the ECU 52. Execution of glow abnormality determination is not permitted at a predetermined timing, for example, depressing an accelerator pedal 24 (not shown).

The timing chart of Fig. 21 shows an example where the abnormality in the glow power distribution has been determined in the previous trip, and the engine is started immediately after completion of correcting the abnormality. The change from the time point t40 to the time point t43 in this timing chart is the same as that from the time point t0 to the time point t2 in the timing chart of Fig. 17. As the glow power distribution is normally performed in the process for calculating the pre-condition at startpup, NO is obtained in step S310 or YES is obtained in step S314. Then the pre-condition at start-up is set to OFF state in step S316.

If YES is obtained in each of steps S400 to S406 of the process for calculating glow abnormality determination execution contidion (Fig. 6), it is determined in step S408 whether the pre-condition at start-up is ON at a time point t43. At this moment, the pre-condition at start-up is set to OFF as there is no possibility of abnormality in the glow plug 22, that is, NO is obtained in step S408. Then in step S410, it is determined whether the abnormality determination has been already set to ON. Actually, the abnormality determination has already been set to ON, that is, YES is obtained in step S410, the abnormality determination is returned to OFF in step S414. The glow abnormality execution is permitted in step S416, thus substantially starting the preliminary abnormality determination process (Fig. 7).

In the preliminary abnormality determination process (Fig. 7), the power distribution to the glow plug is forcibly set to OFF in step S508. At this moment, the power distribution to the glow plug is normally set to OFF, the Iall decreases by an amount equal to or larger than the reference value dIa at a time point t44. This state is continued from the time points t44 to t45, that is, YES is obtained in step S512.

The normality determination is set to ON in step S516 at a time point t45. Therefore, NO is obtained in step S702 of the process for calculating glow abnormality determination stop condition (Fig. 16), and the preliminary abnormality determination is held in OFF state in step S710. Execution of glow abnormality determination is not permitted in step S714, and the preliminary abnormality determination process (Fig. 7) is stopped. Execution of step S712 returns the glow power distribution to ON state after passage of a predetermined time period from the moment when the power distribution to the glow plug is forcibly set to OFF in step S508 at a time point t46.

Upon expiration of the power distribution time set under the normal glow power distribution control at a time point t47, the glow power distribution is set to OFF state. As a result, the pre-condition at start-up set to OFF, the abnormality determination set to OFF, and the normality determination set to ON are stored in the memory of the ECU 52.

The generated current amount, charged/discharged current amount, and current amount consumed by the load can be obtained by executing the process for calculating current amount consumed by the load. The abnormality in the electric load is determined by executing the preliminary abnormality determination process (Fig. 7) and the abnormality determination process (Fig. 8). The IC regulator 58 serves as the battery voltage control mehcanism.

According to the first embodiment, following advantageous features can be obtained.

(1) The current amount consumed by the load Iall corresponding to the current applied to the glow plug 22 and other electric load devices including other electric load 62 (ECU 52, IC regulator 58) is obtained by subtracting the discharged current amount Ibat of the battery from the generated current amount Ialt to be supplied to the electric load devices and the battery 60 by the alternator 54. In other words, when the battery 60 is charged, Ibat becomes larger than 0 (Ibat > 0). The Iall is obtained by subtracting the charged current amount to the battery 60 from the generated current amount Ialt. When the battery 60 is discharged, Ibat becomes smaller than 0 (Ibat < 0). The Iall is obtained by adding the discharged current amount of the battery 60 to the generated current amount Ialt.

The Iall can be accurately obtained based on the generated current amount Ialt and the charged/discharged current amount of the battery Ibat by executing the process for calculating the current amount consumed by the laod (Fig. 9) without the need of direct detection.

The generated current amount Ialt can be obtained using the field coil power distribution duty DF output from the IC regulator 58 to the alternator 54 without the need of providing specific circuits nor elements. The charged/discharged current amount Ibat of battery can be obtained based on the battery voltage VB input to the ECU 52 as the power source without the need of providing specific circuits nor elements.

The Iall, thus, can be accurately obtained using the above-described values Ialt, Ibat in step S560 of the flowchart in Fig. 9. The Iall, that is, the electric load is not susceptible to the idling speed control or the load other than the electric load. Further, it is not susceptible to the characteristics of the diesel engine 2 or the alternator 54, or the control of the diesel engine 2 or the alternator 54. Therefore this makes it possible to detect the abnormality further accurately compared with the detection based on the fuel injection quantity or the field coil power distribution duty DF.

In this embodiment, as the Iall is derived from the generated current amount Ialt and the battery charged/discharged current amount Ibat, the abnormality in the power distribution can be detected without the need of providing specific circuit nor element. The abnormality in the power distribution to the electric load device, that is, the glow plug 22 can be accurately detected.

(2) The total load current value Imax is susceptible to the engine speed NE and the temperature of the alternator 54. The temperature of the alternator 54 diposed in the engine 2 becomes substantially the same as that of the diesel engine 2. Therefore the cooling water temperature THW of the diesel engine 2 can be used in place of the temperature of the alternator 54.

The rotational speed of the alternator 54 may be used in place of the engine speed NE as the alternator 54 is rotated by the diesel engine 2. The Imax, thus, can be accurately calculated based on the detected values of the existing engine speed sensor and the temperature sensor without the need of providing additional sensors. As a result, the abnormality in power distribution to the glow plug 22 can be detected accurately.

(3) The battery charged/discharged current amount Ibat is susceptible to the battery voltage VB and the temperature of the battery 60. Especially, the charging/discharging characteristic of the battery 60 is susceptible to the temperature thereof. As the battery 60 is not directly mounted on the engine 2, the battery temperature is more susceptible to the outside temperature compared with the cooling water temperature THW. Accordingly the intake air temperature THA of the diesel engine 2 can be used in place of the temperature of the battery 60 such that the battery charged/discharged current amount Ibat can be accurately obtained without the need of providing additional temperature sensor for detecting the temperature of the battery 60.

(4) The operation of the glow plug 22 is forcibly controlled to ON/OFF state in the preliminary abnormality determination process (Fig. 7) and the abnormality determination process (Fig. 8). If the power distribution to the glow plug 22 is normally performed, the change in the power supply to the glow plug 22 may greatly influence the change in the Iall. This makes it possible to determine the abnormality of the power distribution to the glow plug 22 with high accuracy.

Second Embodiment

In the second embodiment, upon setting the glow power distribution to ON state under the normal glow power distribution control that has been executed since the start-up operation, only the process for calculating pre-condition at start-up (Fig. 3) is executed so as to set the pre-condition at start-up to ON/OFF state. After completion of setting the glow power distribution to ON state, the glow power distribution is forcibly set to ON/OFF state temporarily in the case where the pre-condition at start-up is set to ON or the abnormality determination has been already set to ON state.

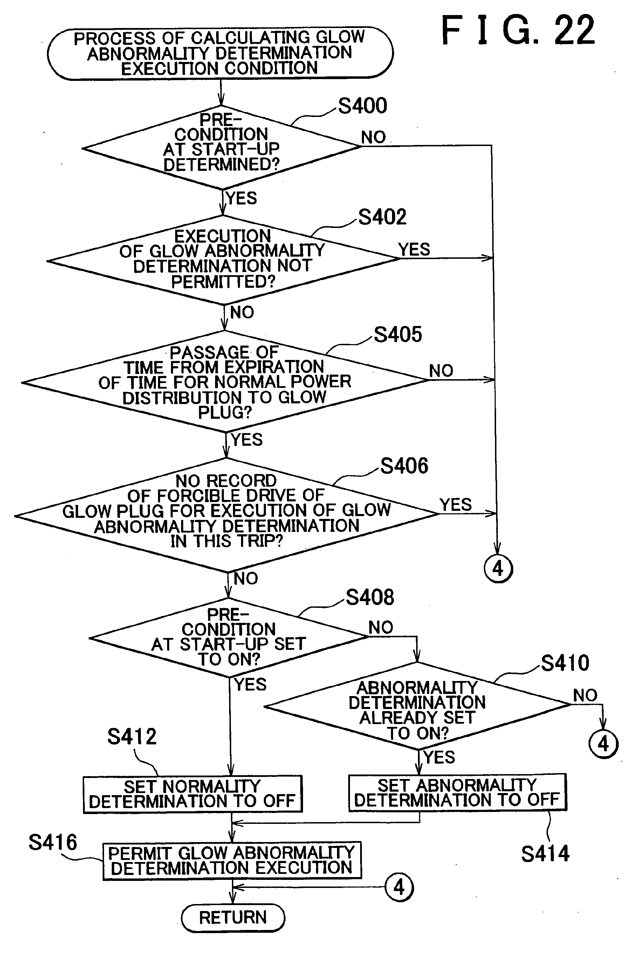

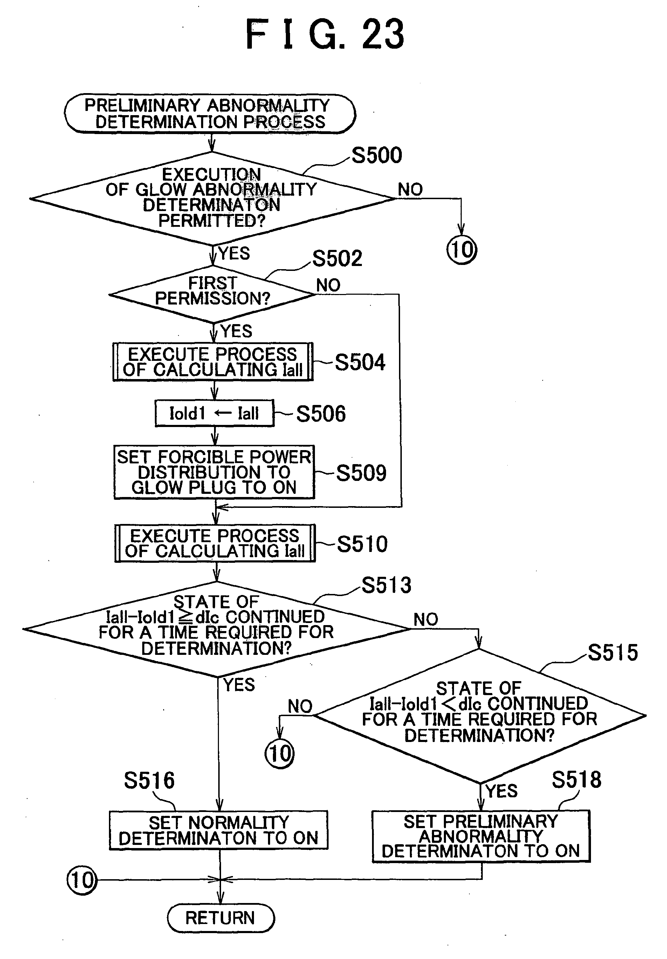

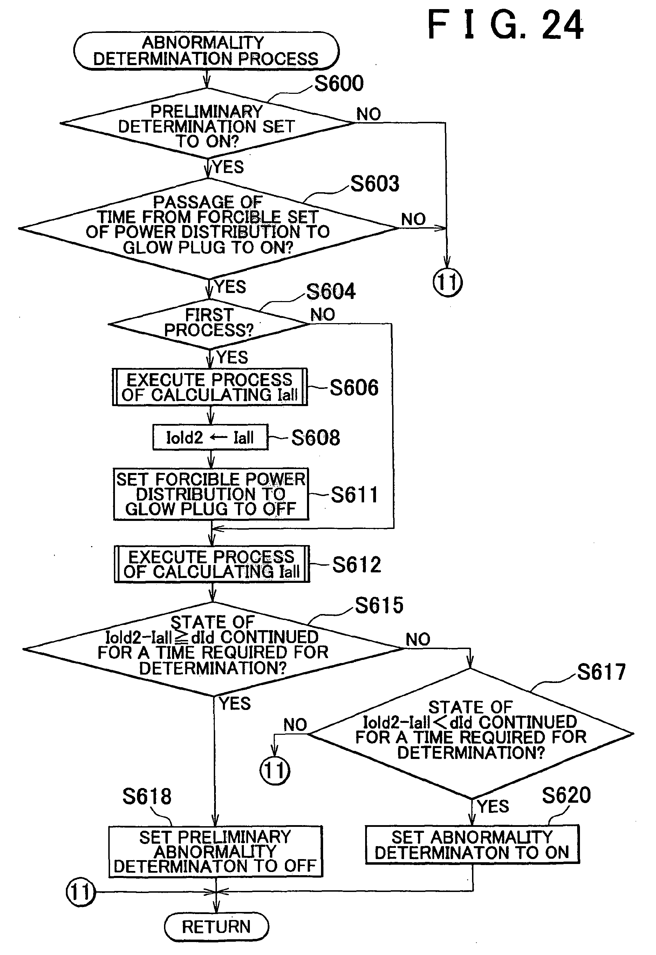

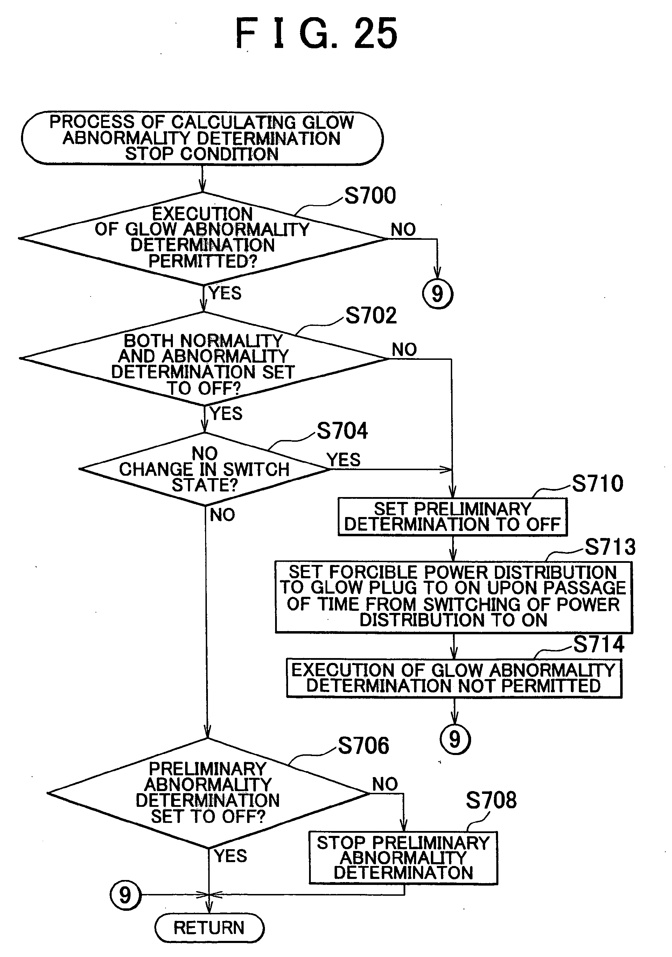

In this embodiment, the control routine of a flowchart shown in Fig. 22 is executed in place of the process for calculating glow abnormality determination execution condition according to the first embodiment as shown by the flowchart of Fig. 6. Also the preliminary abnormality determination process shown in Fig. 23 is executed in place of the one shown in Fig. 7, and the abnormality determination process shown in Fig. 24 is executed in place of the one according to the first embodiment shown in Fig. 8. The process for calculating glow determination stop condition as shown in Fig. 25 is executed in place of the one according to the first embodiment shown in Fig. 16. The same processes in Figs. 22 to 25 as those shown in Figs. 6, 7, 8, and 16 are designated with the same step numbers, and the explanation of those processes, thus, will be omitted. The other structure and processes are the same as those of the first embodiment.

Referring to the flowchart of Fig. 22, it is determined whether a predetermined time passes after expiration of the time taken for the normal power distribution to the glow plug in step S405 in place of step S404 of the flowchart shown in Fig. 6 as the condition for permitting execution of glow abnormality determination.

The execution of glow abnormality determination is not permitted in step S416 until the time for the normal glow power distribution expires. In the state where the normal glow power distribution is set to ON state, forcible switching operation of the glow power distribution to either OFF or ON is not executed.

After expiration of the time taken for the normal glow power distribution, in the case where YES is obtained in step S400, NO is obtained in step S402, YES is obtained in step S405, and NO is obtained in step S406 in the flowchart shown in Fig. 22, the process proceeds to step S408 where it is determined whether the pre-condition at start-up is set to ON state. If NO is obtained in step S408, that is, the pre-condition at start-up set in the process for calculating the pre-condition at start-up (Fig. 3), the process proceeds to step S410 where it is determined whether the abnormality determination has been already set to ON. If NO is obtained in setp S410, that is, the abnormality determination has been set to OFF, the control routine ends. Therefore, the forcible switching operation to set the glow power distribution to ON or OFF state is not executed so long as in the same trip. In this case, the process proceeds in accordance with the timing chart of the first embodiment as shown in Fig. 17.

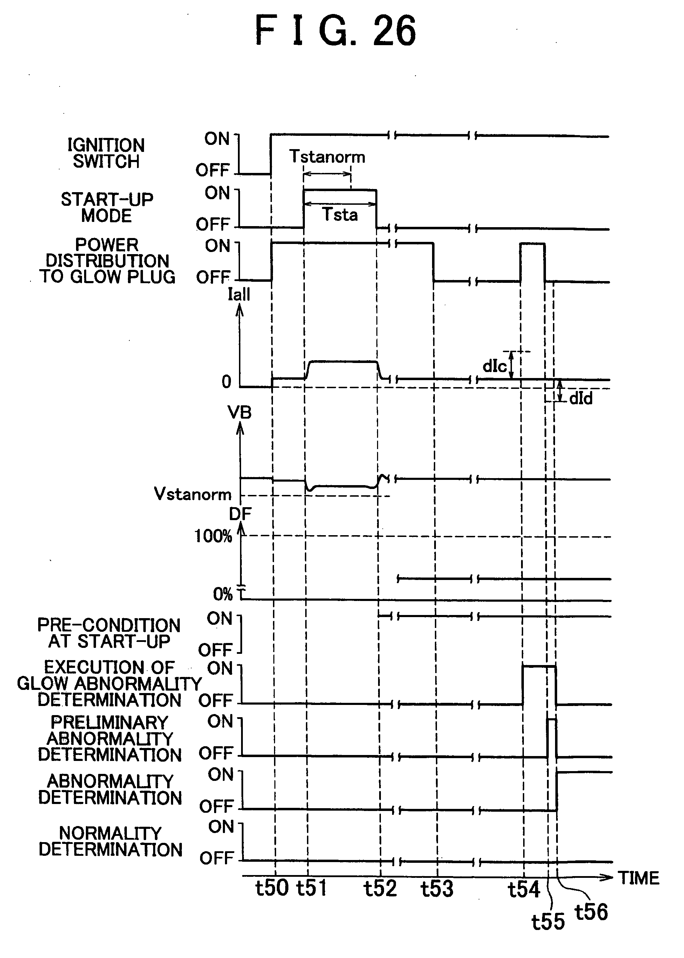

Assuming that the pre-condition at start-up is set to ON in the process for calculating the pre-condition at start-up (Fig. 3), the forcible switching operation of the glow power distribution to OFF or ON state is not executed within the time taken for the normal glow power distribution. For example, as shown in the timing chart of Fig. 26, the ignition switch 28 is set to ON at a time point t50, the starter 30 is driven upon permission of driving at a time point t51, and the start-up of the engine is completed at a time point t52. In this case, the actual start-up time Tsta is longer than the normal start-up time Tstanorm, and has no record that the battery voltage VB drops below the normal minimum voltage at star t-up Vstanorm. Then YES is obtained in step S310 and NO is obtained in step S314 in the process for calculating pre-condition at start-up (Fig. 3). The pre-condition is set to ON in step S318. However, the preliminary abnormality determination process (Fig. 23) is not started immediately, waiting for expiration of the completion of the time for normal glow power distribution.

After expiration of the normal glow power distribution at a time point t53, when YES is obtained in step S400, NO is obtained in step S402, YES is obtained in S405, and NO is obtained in step S406 of the process for calculating glow abnormality determination execution condition as shown in Fig. 22, the process proceeds to step S408. In step S408, it is determined whether the pre-condition at start-up is set to ON state. If YES is obtained in step S408, that is, the pre-condition is set to ON state, the normality determination is set to OFF state in step S412 (in the timing chart shown in Fig. 26, the OFF state is maintained). Then in step S416, execution of the glow abnormality determination is permitted at a time point t54. As a result, YES is obtained in step S500 of the preliminary abnormality determination process (Fig. 23), and YES is obtained in step S502. Subsequent to steps S504, S506, the glow power distribution is forcibly set to ON in step S509.

In step S510, the current amount consumed by the load Iall is calculated by executing the process for calculating the current amount consumed by the load (Fig. 9). The process proceeds to step S513 where it is determined whether the state in which the Iall establishes the following equation 11 is continued for a time period required to determine the increase in the Iall. Equation (11)

$$Iall - Iold1 \geqq dIc \qquad (11)$$

where the dIc may be set to the value either equivalent to the reference value dIb used in the equation (9) of the first embodiment or different from the reference value dIb.

If NO is obtained in step S513, that is, the equation (11) is not established or the established state is not continued for the time period required for determining the increase in the Iall, the process proceeds to step S515. In step S515, it is determined whether the established state of the following equation 12 is continued for the time period required for determining unchanged state of the Iall.
Equation (12)

$$Iall - Iold1 < dIc \qquad (12)$$

As the timing chart in Fig. 26 shows, if the state in which the equation (11) is not established and the equation (12) is established is continued for the time period required for determining the unchanged state of the Iall, that is, YES is obtained in step S515 at a time point t55, the process proceeds to step S518 where the preliminary abnormality determination is set to ON state. This indicates that the glow power distribution that should be OFF prior to the forcible switching operation of the glow power distribution to ON in step S509 is kept in ON state, or the glow power distribution is not set to ON state in spite of the instruction of the ECU 52 in step S509. Therefore, the preliminary abnormality determination set to ON is stored in the back-up RAM in the ECU 52. The control routine, thus ends.

Upon setting of the preliminary abnormality determination to ON state, the preliminary abnormality determination process (Fig. 23) is stopped in step S708 by executing the process for calculating glow abnormality determination stop condition (Fig. 25). Then YES is obtained in step S600, that is, the abnormality determination process (Fig. 24) is executed. In this process, it is determined in step S603 whether a predetermined time passes from execution of step S509 where the glow power distribution is forcibly set to ON. Like the predetermined period described in step S602 of the flowchart in Fig. 8, the predetermined period in this case is provided to avoid deterioration in durability of the glow relay 22a resulting from the ON/OFF switching operation thereof within a short period of time. If NO is obtained in step S603, that is, the predetermined time has not passed yet, the control routine ends such that the abnormality determination process is not started.

If YES is obtained in step S603, that is, the predetermined period has been passed, the process proceeds to step S604 whether the process is executed first since YES is obtained in step S603. If YES is obtained in step S604, that is, the process is executed first, the process proceeds to step S606 where the present value of the Iall is calculated, and further to step S608 where the current amount Iold2 consumed by the load just before setting the glow power distribution to ON is stored. Then in step S611, the glow power distribution is forcibly set to OFF state.

In step S615, it is determined whether the state in which the Iall establishes the following equation (13) is continued for the time period required for determining the increase in the Iall.
Equation (13)

$$Iold2 - Iall \geqq dId \qquad (13)$$

where the dId may be set to the value either equivalent to the reference value dIa used in the equation (7) of the first embodiment or the value different from the dIa.

If NO is obtained in step S615, that is, the equation (13) is not established or the established state of the equation (13) is not continued for the time period required for determining the decrease in the Iall, the process proceeds to step S617. In step S617, it is determined whether the established state of the following equation (14) is continued for the time period required for determining the unchanged state of the Iall.
Equation (14)

$$Iold2 - Iall < dId \qquad (14)$$

As the timing chart of Fig. 26 shows, if YES is obtained in step S617, that is, the established state of the equation (14) is continued for the time period required for determining the unchanged state of the Iall at a time point t56, the process proceeds to step S620 where the abnormality determination is set to ON state. This indicates that the glow power distribution is not normally performed prior to execution of step S611 where the glow power distribution is forcibly set to OFF state, or the glow power distribution is not set to OFF contrary to the instruction of the ECU52 (step S611).

As a result, the preliminary abnormality is determined through the preliminary abnormality determination process (Fig. 23) and the abnormality is determined through the abnormality determination process (Fig. 24). This indicates a high possibility of the abnormality in the power distribution to the glow plug. Therefore, the information containing the abnormality determination set to ON is stored in the back-up RAM in the ECU 52 in step S620. The control routine, thus, ends.

Upon setting the abnormality determination to ON state, NO is obtained in step S702 of the process for calculating glow abnormality determination stop condition (Fig. 25). The process proceeds to step S710 where the preliminary abnormality determination is returned to OFF state. Then in step S714, execution of glow abnormality determination is not permitted, and the abnormality determination process (Fig. 24) is stopped. As a result, the pre-condition at start-up set to ON, the abnormality determination set to ON, and the normality determination set to OFF are stored as the inner information such as diagnosis in the memory of the ECU 52. As the power distribution to the glow plug has already been switched to OFF state, step S713 is not executed.

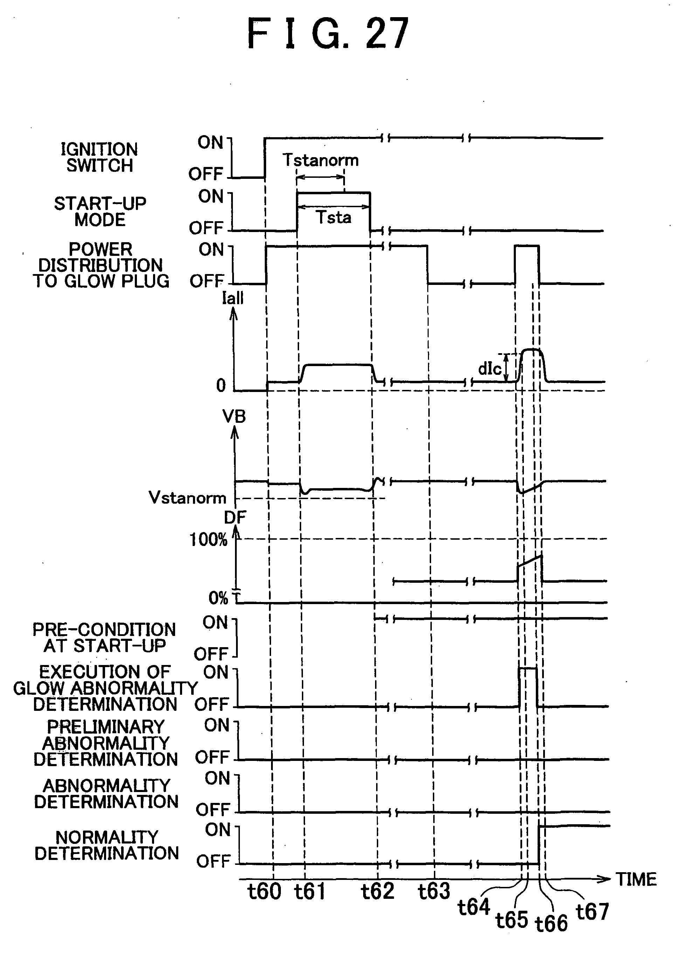

Referring to the timing chart of Fig. 27, setting the normality determination to ON will be described. The change from the time point t60 to time point t64 of the timing chart is similar to that obtained from the time point t50 to time point t54 of the timing chart of Fig. 26. Then in step S509 of the flowchart of the preliminary abnormality determination (Fig. 23), which is started at the time point t64, the glow power distribution is forcibly set to ON state. This may cause the electric current to be normally applied to the glow plug 22. Accordingly the Iall starts increasing. At a time point t65, the equation (11) is established, and the established state is continued for the period from the time point t65 to t66 (YES is obtained in step S513). In step S516, the normality determination is set to ON at a time point t66. Accordingly NO is obtained in step S702 of the process for calculating glow abnormality determination stop condition (Fig. 25). In step S710, the preliminary abnormality determination is maintained in OFF state, and in step S714, execution of glow abnormality determination is not permitted. Therefore the preliminary abnormality determination process (Fig. 23) is substantially stopped. Then in step S713, the power distribution to the glow plug is set to OFF after passage of the predetermined time period at a time point t67.

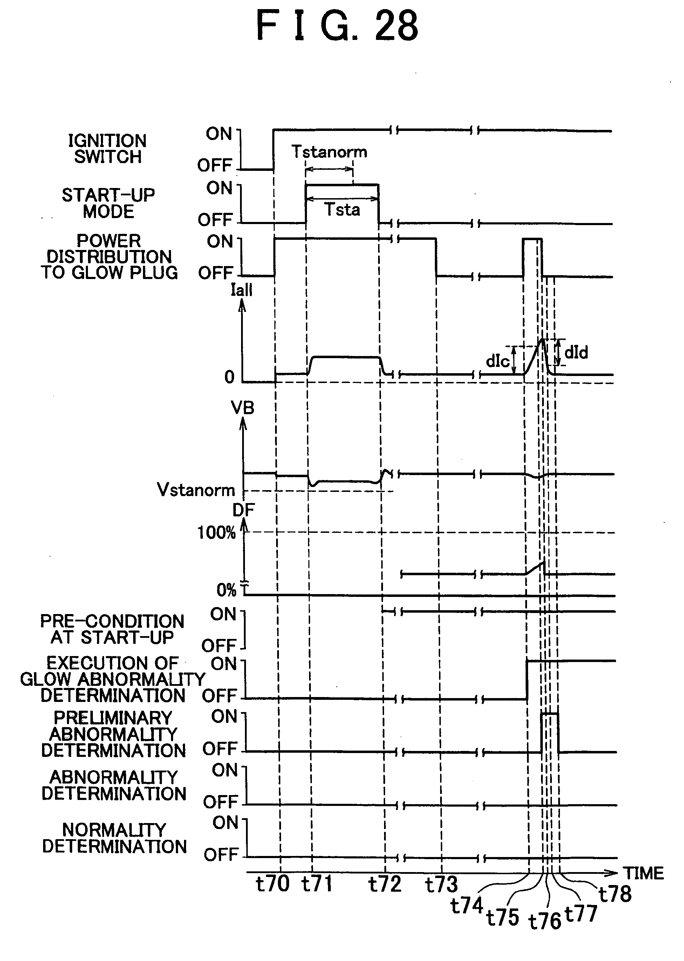

The pre-condition at start-up set to ON, the abnormality determination set to OFF, and the normality determination set to ON are stored in the memory of the ECU 52. The timing chart shown in Fig. 28 represents the first change in the glow power distribution normally obtained in the abnormality determination process (Fig. 24). The change from the time point t70 to t74 is the same as that from the time point t50 to t54 of the timing chart shown in Fig. 26. In step S509, the forcibleglow power distribution is set to ON in the preliminary abnormality determination process (Fig. 23) started at a time point t74. Upon setting the forcible power distribution to the glow plug 22 to ON, the current amount applied to the glow plug 22 gradually increases. Therefore, the established state of the equation 12 is continued for the predetermined reference time period before the established state of the equation 11 is continued for the predetermined reference period, that is, YES is obtained in step S515 of the control routine (Fig. 7) at t75. In step S518, the preliminary abnormality determination is set to ON. When the preliminary abnormality determination is set to ON, that is, NO is obtained in step S706, the preliminary abnormality determination process (Fig. 23) is stopped in step 708. In the abnormality determination process (Fig. 24), a predetermined time period passes since the power distribution to the glow plut is set to ON in step S509 in the preliminary determination process (Fig. 23). Then in step S603, the glow power distribution is forcibly set to OFF in step S611 at a time point t76.

Upon forcible setting of the glow power distribution to OFF state, the electric current that has been applied to the glow plug 22 is normally stopped to establish the equation (13) at a time point t77. If the established state is continued for the time period required for the determination from the time point t77 to the time point t78 (YES is obtained in step S615), the process proceeds to step S618 where the preliminary abnormality determination is returned to OFF state. As the preliminary abnormality determination is set to OFF state, the abnormality determination process (Fig. 24) is stopped, that is, NO is obtained in step S600. As a result, the pre-condition at start-up set to ON, the abnormality determination set to OFF, and the normality determination set to OFF are stored in the memory of the ECU52.

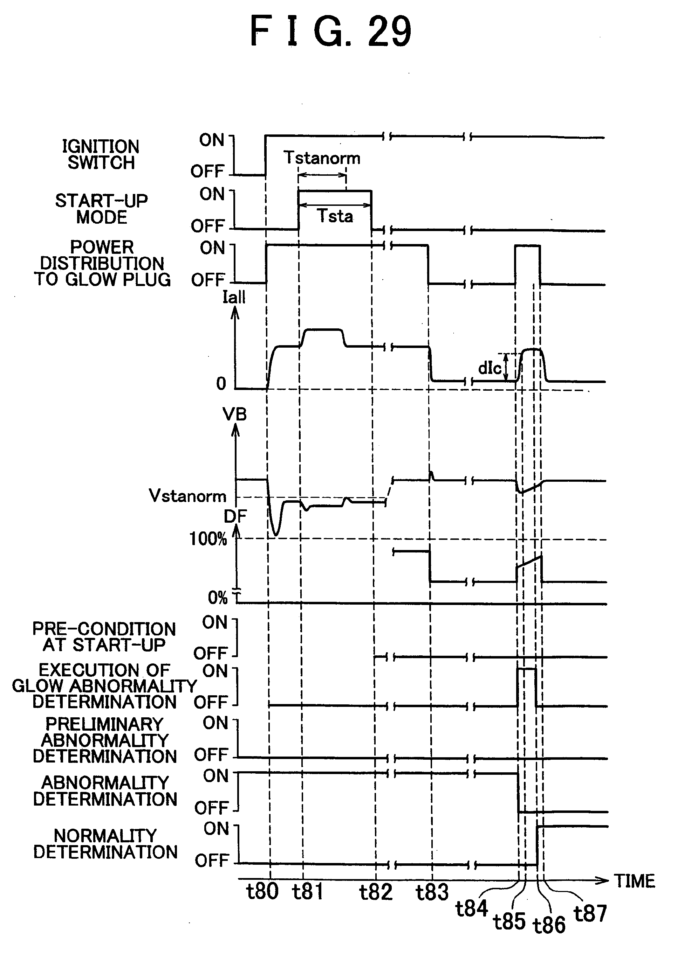

The timing charg of Fig. 29 represents start-up of the engine immediately after fixing the abnormality in glow power distribution, which has been detected in the preivious trip. The change from the time point t80 to the time point t83 is similar to that from the time point t0 to the time point t3 in the timing chart of Fig. 17. At the aforementioned timing, the glow power distribution is normally performed in the process for calculating the pre-condition at start-up (Fig. 3). Therefore NO is obtained in step S310 or YES is obtained in step S314 such that the precondition at start-up is set to OFF in step S316 at a time point t82.

If the condition for steps S400 to S406 in the process of calculating execution condition for the glow abnormality determination shown in the flowchart of Fig. 22 is established after completion of the normal glow power distribution at a time point t83, it is determined whether the pre-condition at start-up is set to ON in step S408. The pre-condition at start-up is set to OFF, that is, NO is obtained in step S408. Then it is determined whether the abnormality determination has already been set to ON in the previous trip in step S410. In this case, the abnormality determination has been set to ON, that is, YES is obtained in step S410, the abnormality deemrination is returned to OFF state in step S414 such that execution of the glow abnormality determination is permitted in step S416 at a time point t84. This causes the process for preliminary abnormality determination (Fig. 23) to be started, and the equation (11) is established at a time point t85. When the established state is continued from a time point t85 to a time point t86, that is, YES is obtained in step S513, the normality determination is set to ON in step S516.

As a result, NO is obtained in step S702 in the process of calculating the glow abnormality determination stop condition (Fig. 25). Then the glow power distribution is forcibly set to OFF in step S713 at a time point t87. As the preliminary abnormality determination is set to OFF in step S710, and execution of the glow abnormality determination is not permitted in step S714, the preliminary abnormality determination process (Fig. 23) is stopped. Accordingly the pre-condition at start-up set to OFF, the abnormality determination set to OFF, and the normality determination set to ON are stored in the memory of the ECU 52.

In the above-described structure, the preliminary abnormality determination process and the abnormality determination process serve to determine abnormality in the electric load. The aforementioned embodiment provides the following advantageous effects.

(5) The same advantageous effects to those identified as (1) to (4) of the first embodiment are obtained.

(6) The preliminary abnormality determination process (Fig. 23) and the abnormality determination process (Fig. 24) are executed after expiration of the time period for performing the normal glow power distribution. As a result, each operating state of the electric loads other than the glow plug 22 becomes stable. The current amount consumed by the load Iall is not influenced by the unstable operating state of the other electric load 62, resulting in improved detection accuracy.

The detection of abnormality in glow power distribution is executed after expiration of the time period for performing normal glow power distribution. Such detection may not give an adverse influence on the normal control for the glow power distribution. As a result, the engine operation after start-up especially cold-starting can be further stabilized.

The detection of the abnormality in the glow power distribution is not executed within the normal time period for the glow power distribution. Therefore, there is sufficient opportunity for detecting the abnormality in the glow power distribution even if the time period for glow power distribution is short as the diesel engine has already been warmed up.

Other embodiment

(a) In the process for calculating glow abnormality determination execution condition (Figs. 6, 22), execution of the glow abnormality determination is permitted in step S416 such that the prelimnary abnormaity determination process (Figs. 7, 23) and the abnormality determination process (Figs. 8, 24) are executed irrespective of the idling state of the diesel engine 2. Alternatively, execution of the glow abnormality determination may be permitted upon establishment of the condition where the engine is in the idling state.

Execution of the glow abnormality determination may further be permitted so long as the engine is in the state similar to the idling state. For example, execution of the glow abnormality determination may be permitted when power transmission from the diesel engine to the wheels is not performed during running downhill of the vehicle or running in an inertial state.

The aforementioned condition can be used in the process for calculating the glow abnormality deemrination stop condition (Figs. 16, 25).

(b) The abnormality determination is set to ON when the degree of change in the current amount consumed by the load Iall upon switching operation of the glow power distribution is small both in the preliminary abnormality determination process (Figs. 7, 23) and the abnormality determination process (Figs. 8, 24). Alternatively the preliminary abnormality determination process may only be executed. When there is a change in the Iall resulting from switching operation of the glow power distribution, the normality determination is set to ON. Meanwhile when the degree of change in the Iall is small, the abnormality detmrination is set to ON.

(c) According to the first embodiment, the switching operation between ON and OFF of the forcible glow power distribution for the abnormality detection is performed only within the period when the glow power distribution is set to ON. The structure, however, may be formed by combining the first and the second embodiments.

If the forcible switching operation of the glow power distribution for the abnormality detection cannot be performed during ON state of the glow power distribution, the forcible setting of the glow power distribution to ON/OFF may be performed in the same manner as in the second embodiment so as to determine the abnormality. This makes it possible to determine the abnormality through the forcible glow power distribution at an earlier stage with more reliability compared with the first embodiment or the second embodiment.

(d) In each of the aforementioned embodiments, the cooling water temperature is used as the temperature of the alternator. However, the temperature of the engine oil may be used, or the engine temperature may be estimated based on the balance of generation of power resulting from combustion and release of heat in the diesel engine.

(e) The battery voltage VB in the process for calculating the pre-condition at start-up (Fig. 3) at the start-up (from start-up to the completion thereof) is recorded. The battery voltage VB from the moment when the ignition switch is set to ON to the start-up may be recorded. Alternatively the record of the battery voltage VB may be obtained immediately after completion of start-up of the diesel engine 2.

(f) The records of the start-up time Tsta and the battery voltage VB are used for determining the pre-condition at start-up in the process for calculating the pre-condition at start-up (Fig. 3). Alternatively, the pre-conditoin at start-up may be set to ON/OFF in accordance only with the start-up time Tsta, or only with the battery voltage VB.

The pre-condition at start-up is set to OFF state if at least one of the conditions where the start-up time Tsta is equal to or shorter than the normal start-up time Tstanorm is established and where the battery voltage VB drops below the normal minimum voltage at start-up Vstanorm is established. Alternatively, the pre-condition at start-up may be set to OFF state if the above two conditions are established, and set to ON state if those conditions are not established.

(g) In each of the above-described embodiments, the abnormality in the power distribution to the glow plug 22 is detected. The abnormality in the power distribution to electric load devices other than the glow plug 22 may be detected in the same manner as well. The degree of change in the current amount consumed by the load Iall is determined in ON/OFF state of such electric load device so as to determine the abnormality in the power distribution to the electric load device. This may be applied not only to the diesel engine but also the gasoline engine.

A generated current amount (Ialt) is obtained using a field coil power distribution duty (DF) (S554, S556), and a charged/discharged current amount (Ibat) of a battery is obtained using a voltage of the battery (VB) (S558). A current amount applied to an electric load (Iall) is obtained based on the above-obtained generated current amount (Ialt) and the charged/discharged current amount (Ibat) (S560). This makes it possible to detect an abnormality in the power distribution to the electric load device without the need of providing an additional circuit or element. Therefore, the abnormality in power distribution to the electric load device, that is, a glow plug of the internal combustion engine can be detected with high accuracy. Selected figure: Fig. 9

**Claims**

1. A method of detecting an abnormality in power distribution to an electric load device of an internal combustion engine based on a value corresponding to a change in a power supply to the electric load device, the method being **characterized by** comprising:

   calculating a current amount (Iall) applied to the electric load device based on a generated current amount (Ialt) to be supplied from a generator to the electric load device and a battery, and a charged/discharged current amount (Ibat) of the battery; and
   determining whether there is the abnoramltiy in power distribution to the electric load device based on the value corresponding to a change in the current amount applied to the electric load device in response to the change in the power supply to the electric load device.

2. The method according to claim 1, **characterized in that**:

   the internal combustion engine comprises a diesel engine (2);
   the electric load device includes a glow plug (22) of the internal combustion engine; and
   it is determined whether there is the abnormality in power distribution to the glow plug based on the value corresponding to the change in the current amount in response to the change in the power supply to the glow plug (22).

3. The method according to claim 1 or 2, **characterized in that**:

   an operating state of the generator (54) is controlled by a battery voltage control mechanism (58) based on a voltage of the battery (60);
   the generated current amount is obtained based on a generation control amount of the generator (54) controlled by the battery voltage control mechanism;
   the charged/discharged current amount is obtained based on the voltage of the battery adjusted by the battery voltage control mechanism (58); and
   the current amont (Iall) applied to the electric load device is obtained based on the generated current amount and the charged/discharged current amount.

4. The method according to claim 3, **characterized in that** the battery voltage control mechanism (58) executes a feedback control of the operating state of the generator (54) using the generation control amount such that the voltage of the battery (60) is within a reference range.

5. The method according to claim 3 or 4, **characterized in that** the generation control amount of the generator (54) controlled by the battery voltage control mechanism (58) comprises a field coil power distribution duty (DF) of the generator.

6. The method according to claim 5, **characterized in that** the generated current amount is obtained by multiplying the field coil power distribution duty (DF) by a total load current value of the generator (54).

7. The method according to claim 6, **characterized in that** the total load current value of the generator (54) is obtained based on a rotational speed and a temperature of the generator.

8. The method according to claim 7, **characterized in that** an engine speed of the internal combustion engine for driving the generator (54) is used in place of the rotational speed of the generator.

9. The method according to claim 7 or 8, **characterized in that** a temperature of a cooling water of the internal combustion engine (2) is used in place of the temperature of the generator.

10. The method according to any one of claims 1 to 9, **characterized in that** the charged/discharged current amount of the battery (60) is obtained based on the voltage and a temperature of the battery.

11. The method according to claim 10, **characterized in that**:

a charging/discharging characteristic of the battery (60) is obtained based on the temperature of the battery; and
the charged/discharged current amount of the battery is obtained based on the obtained charging/discharging characteristic of the battery and the voltage of the battery.

12. The method according to claim 10 or 11, **characterized in that** an intake air temperature in the internal combustion engine (2) is used in place of the temperature of the battery.

13. The method according to any one of claims 1 to 12, **characterized in that** the change in the power supply to the electric load device is caused between a state where the power distribution to the electric load device is set to ON and a state where the power distribution to the electric load device is set to OFF.

14. A system of detecting an abnormality in power distribution to an electric load device of an internal combustion engine based on a value corresponding to a change in a power supply to the electric load device, the system being **characterized by** comprising a controller that:

obtains a generated current amount supplied from a generator to the electric load device and a battery (60);
obtains a charged/discharged current amount of the battery;
obtains a current amount (Iall) applied to the electric load device based on the obtained generated current amount and the obtained charged/discharged current amount; and
determines whether there is the abnormality in the power distribution to the electric device based on the value corresponding to a change in the obtained current amount applied to the electric load device in response to the change in the power supply to the electric load device.

15. The system according to claim 14, **characterized in that**:

the internal combustion engine comprises a diesel engine (2);
the electric load device includes a glow plug (22); and
the controller determines whether there is the abnormality in power distribution to the glow plug based on the value corresponding to the change in the current amount in response to the change in the power supply to the glow plug (22).

16. The system according to claim 14 or 15, **characterized in that**:

an operating state of the generator (54) is controlled by a battery voltage control mechanism (58) based on the voltage of the battery (60);
the generated current amount is obtained based on a generation control amount of the generator (54) controlled by the battery voltage control mechanism (58);
the charged/discharged current amount is obtained based on the voltage of the battery (60) adjusted by the battery voltage control mechanism; and
the current amount (Iall) applied to the electric load device is obtained based on the generated current amount and the charged/discharged current amount.

F I G. 1

# F I G. 2

ENGINE 2

2a

2b

GLOW PLUG 22

GLOW RELAY 22a

ECU 52

ALTERNATOR 54

Ialt

DF

IC REGULATOR 58

DF

VB

VB

Ibat

Iall

COMPRESSOR FOR A/C 56

BATTERY 60

OTHER ELECTRIC LOAD 62

EP 1 410 952 A2

# FIG.3

PROCESS OF CALCULATING PRE-CONDITION AT START-UP

S300 — PRE-CONDITION AT START-UP UNDETERMINED? — NO → ①

YES

S301 — THW ≦ REFERENCE VALUE? — NO →

YES

S302 — START-UP COMPLETED? — NO → ①

YES

S304 — READ Tsta

S306 — READ THWs

S308 — CALCULATE Tstanorm

S310 — $Tsta > Tstanorm$? — NO → ②

YES

S312 — READ RECORD OF VB AT START-UP

S314 — VB DROPPED BELOW Vstanorm? — NO →

YES → ②

S318 — PRE-CONDITION AT START-UP ← ON

S316 — PRE-CONDITION AT START-UP ← OFF

① 

RETURN

# F I G. 4

Tstanorm

THWs

# F I G. 5

Vstanorm

THWs

FIG. 6

PROCESS OF CALCULATING GLOW
ABNORMALITY DETERMINATION
EXECUTION CONDITION

S400
PRE-CONDITION AT START-UP DETERMINED ? — NO

YES

S402
EXECUTION OF GLOW ABNORMALITY DETERMINATION NOT PERMITTED ? — YES

NO

S404
REMAINED TIME FOR POWER DISTRIBUTION TO GLOW PLUG EQUAL TO OR LONGER THAN TIME SUFFICIENT TO EXECUTE ABNORMALITY DETERMINATION ? — NO

YES

S406
RECORD OF FORCIBLE DRIVE OF GLOW PLUG FOR GLOW ABNORMALITY DETERMINATION EXISTS IN PRESENT TRIP ? — YES

4

NO

S408
PRE-CONDITION AT START-UP SET TO ON ? — NO

YES

S410
ABNORMALITY DETERMINATION ALREADY SET TO ON ? — NO

4

YES

S412
SET NORMALITY DETERMINATION TO OFF

S414
SET ABNORMALITY DETERMINATION TO OFF

S416
EXECUTION OF GLOW ABNORMALITY DETERMINATION PERMITTED

4

RETURN

EP 1 410 952 A2

# FIG.7

PRELIMINARY DETERMINATION PROCESS

S500
EXECUTION OF GLOW ABNORMALITY DETERMINATION PERMITTED ?
NO → (7)
YES

S502
FIRST PERMISSION ?
NO
YES

S504
EXECUTE PROCESS OF CALCULATING Iall

S506
Iold1 ← Iall

S508
SET FORCIBLE POWER DISTRIBUTION TO GLOW PLUG TO OFF

S510
EXECUTE PROCESS OF CALCULATING Iall

S512
STATE OF Iold1 − Iall $\geqq$ dIa CONTINUED FOR A TIME REQUIRED FOR DETERMINATION OR LONGER ?
NO → S514
STATE OF Iold1 − Iall $<$ dIa CONTINUED FOR A TIME REQUIRED FOR DETERMINATION OR LONGER ?
NO → (7)
YES
YES

S516
SET NORMALITY DETERMINATION TO ON

S518
SET PRELIMINARY ABNORMALITY DETERMINATION TO ON

(7)

RETURN

29

F I G . 8

ABNORMALITY DETERMINATION PROCESS

S600
PRELIMINARY ABNORMALITY DETERMINATION SET TO ON ? — NO

YES

S602
PASSAGE OF TIME FROM SETTING FORCIBL POWER DISTRIBUTION TO GLOW PLUG TO OFF ? — NO

8

YES

S604
FIRST PROCESS ? — NO

YES

S606
EXECUTE PROCESS OF CALCULATING Iall

S608
Iold2 ← Iall

S610
SET FORCIBLE POWER DISTRIBUTION TO GLOW PLUG TO ON

S612
EXECUTE PROCESS OF CALCULATING Iall

S614
STATE OF Iall − Iold2 ≧ dIb CONTINUED FOR A PERIOD EQUAL TO OR LONGER THAN A PERIOD REUIRED FOR DETERMINATION ? — NO

S616
STATE OF Iall − Iold2 < dIb CONTINUED FOR A PERIOD EQUAL TO OR LONGER THAN A PERIOD REUIRED FOR DETERMINATION ?

NO

8

YES

S618
SET PRELIMINARY ABNORMALITY DETERMINATION TO OFF

YES

S620
SET ABNORMALITY DETERMINATION TO ON

8

RETURN

# F I G . 9

```
┌─────────────────────────────────────┐
│   PROCESS OF CALCULATING Iall        │
└─────────────────────────────────────┘
                 │
                 ▼
┌─────────────────────────────────┐  ⌐S552
│   READ DF, VB, NE, THW, THA     │
└─────────────────────────────────┘
                 │
                 ▼
┌─────────────────────────────────────────┐  ⌐S554
│         CALCULATE Imax                    │
│  Imax ← MAPne(NE) × MAPthw(THW)          │
│              OR                           │
│     Imax ← MAPimax(NE,THW)               │
└─────────────────────────────────────────┘
                 │
                 ▼
┌─────────────────────────────┐  ⌐S556
│      CALCULATE Ialt          │
│     Ialt ← DF × Imax         │
└─────────────────────────────┘
                 │
                 ▼
┌──────────────────────────────────────────┐  ⌐S558
│           CALCULATE Ibat                   │
│  Ibat ← [VB−MAPa(THA)] × MAPb(THA)        │
│               OR                           │
│      Ibat ← MAPibat(VB,THA)               │
└──────────────────────────────────────────┘
                 │
                 ▼
┌─────────────────────────────┐  ⌐S560
│     Iall ← Ialt − Ibat       │
└─────────────────────────────┘
                 │
                 ▼
         ┌──────────────┐
         │    RETURN     │
         └──────────────┘
```

F I G. 10

MAPne(NE)                    [MAPne]

0

0                                    NE

F I G. 11

MAPthw(THW)              [MAPthw]

1.0

25°C                              THW

F I G. 12

[MAPimax]

Imax                                 LOW THW

0                                    HIGH THW

0                                    NE

**F I G. 13**

MAPa(THA)　　　[MAPa]

12.8V

0

25°C

THA

**F I G. 14**

MAPb(THA)　　　[MAPb]

0

25°C

THA

**F I G. 15**

Ibat　　　[MAPibat]

LOW THA

0

HIGH THA

12.8V

VB

EP 1 410 952 A2

# F I G. 16

PROCESS OF CALCULATING GLOW
ABNORMALITY DETERMINATION
STOP CONDITION

S700
EXECUTION OF GLOW ABNORMALITY DETERMINATION PERMITTED?
NO → (9)
YES

S702
BOTH NORMALITY AND ABNORMALITY DETERMINATION SET TO OFF?
NO
YES

S704
NO CHANGE IN SWITCH STATE?
YES
NO

S710
SET PRELIMINARY DETERMINATION TO OFF

S712
SET FORCIBLE POWER DISTRIBUTION TO GLOW PLUG TO ON UPON PASSAGE OF TIME FROM SWITCHING OF POWER DISTRIBUTION FROM ON TO OFF

S714
EXECUTION OF GLOW ABNORMALITY DETERMINATION NOT PERMITTED

(9)

S706
PRELIMINARY ABNORMALITY DETERMINATION SET TO OFF?
NO

S708
STOP PRELIMINARY ABNORMALITY DETERMINATON

YES

(9)

RETURN

34

# FIG. 17

EP 1 410 952 A2

# F I G. 18

# F I G. 19

# F I G. 20

# F I G. 21

EP 1 410 952 A2

# F I G. 22

PROCESS OF CALCULATING GLOW
ABNORMALITY DETERMINATION
EXECUTION CONDITION

**S400** PRE-CONDITION AT START-UP DETERMINED? — NO

YES

**S402** EXECUTION OF GLOW ABNORMALITY DETERMINATION NOT PERMITTED? — YES

NO

**S405** PASSAGE OF TIME FROM EXPIRATION OF TIME FOR NORMAL POWER DISTRIBUTION TO GLOW PLUG? — NO

YES

**S406** NO RECORD OF FORCIBLE DRIVE OF GLOW PLUG FOR EXECUTION OF GLOW ABNORMALITY DETERMINATION IN THIS TRIP? — YES → (4)

NO

**S408** PRE-CONDITION AT START-UP SET TO ON? — NO

YES

**S410** ABNORMALITY DETERMINATION ALREADY SET TO ON? — NO → (4)

YES

**S412** SET NORMALITY DETERMINATION TO OFF

SET ABNORMALITY DETERMINATION TO OFF **S414**

**S416** PERMIT GLOW ABNORMALITY DETERMINATION EXECUTION → (4)

RETURN

40

# F I G. 23

```
┌────────────────────────────────────┐
│    PRELIMINARY ABNORMALITY         │
│    DETERMINATION PROCESS           │
└────────────────────────────────────┘
```

S500

EXECUTION OF GLOW ABNORMALITY DETERMINATON PERMITTED?

NO → ⑩

YES

S502

FIRST PERMISSION?

NO →

YES

EXECUTE PROCESS OF CALCULATING Iall — S504

Iold1 ← Iall — S506

SET FORCIBLE POWER DISTRIBUTION TO GLOW PLUG TO ON — S509

EXECUTE PROCESS OF CALCULATING Iall — S510

S513

STATE OF Iall−Iold1 ≥ dIc CONTINUED FOR A TIME REQUIRED FOR DETERMINATION?

NO →

S515

STATE OF Iall−Iold1 < dIc CONTINUED FOR A TIME REQUIRED FOR DETERMINATION?

NO → ⑩

YES

YES

S516

SET NORMALITY DETERMINATON TO ON

S518

SET PRELIMINARY ABNORMALITY DETERMINATON TO ON

⑩

RETURN

# F I G. 24

```
     ┌─────────────────────────┐
     │   ABNORMALITY           │
     │ DETERMINATION PROCESS   │
     └─────────────────────────┘
                 │  S600
                 ▼
          ╱─────────────╲          NO
        ╱  PRELIMINARY    ╲ ──────────────┐
        ╲ DETERMINATION SET╱               │
          ╲  TO ON?      ╱                 │
            ╲──────────╱                   │
              │ YES                        │
              ▼          S603              │
          ╱──────────────╲                │
        ╱  PASSAGE OF      ╲   NO          │
       ╱ TIME FROM FORCIBLE SET╲ ─────────┤
       ╲ OF POWER DISTRIBUTION TO╱         │
        ╲  GLOW PLUG TO ON?  ╱             │
          ╲──────────────╱                │
              │ YES       S604            ▼
              ▼                          ⑪
          ╱──────────╲    NO
        ╱  FIRST       ╲ ──────────┐
        ╲  PROCESS?   ╱             │
          ╲────────╱                │
              │ YES                 │
              ▼                     │
     ┌─────────────────┐            │
     │ EXECUTE PROCESS │─ S606      │
     │ OF CALCULATING Iall│         │
     └─────────────────┘            │
              │                     │
              ▼                     │
        ┌──────────────┐            │
        │ Iold2 ← Iall │─ S608      │
        └──────────────┘            │
              │                     │
              ▼                     │
     ┌─────────────────┐            │
     │ SET FORCIBLE POWER│          │
     │ DISTRIBUTION TO   │─ S611    │
     │ GLOW PLUG TO OFF  │          │
     └─────────────────┘            │
              │◄───────────────────┘
              ▼
     ┌─────────────────┐
     │ EXECUTE PROCESS │─ S612
     │ OF CALCULATING Iall│
     └─────────────────┘
              │        S615
              ▼
          ╱──────────────────╲        NO
        ╱   STATE OF           ╲ ──────────────┐
       ╱ Iold2-Iall ≧ dId CONTINUED╲           │
       ╲  FOR A TIME REQUIRED FOR  ╱            ▼
        ╲   DETERMINATION?     ╱            ╱──────────────────╲   S617
          ╲──────────────────╱           ╱   STATE OF           ╲
              │ YES                 NO   ╱ Iold2-Iall < dId CONTINUED╲
              │                    ⑪◄────╲  FOR A TIME REQUIRED FOR  ╱
              │                           ╲   DETERMINATION?     ╱
              │                             ╲──────────────────╱
              │                                 │ YES
    S618      ▼                       S620      ▼
     ┌─────────────────┐            ┌─────────────────┐
     │ SET PRELIMINARY │            │ SET ABNORMALITY │
     │  ABNORMALITY    │            │ DETERMINATON TO ON│
     │ DETERMINATON TO OFF│         └─────────────────┘
     └─────────────────┘                    │
  ⑪────────►│◄──────────────────────────────┘
              ▼
        ┌──────────┐
        │  RETURN  │
        └──────────┘
```

# F I G. 25

```
PROCESS OF CALCULATING GLOW
ABNORMALITY DETERMINATION
STOP CONDITION
```

S700

EXECUTION
OF GLOW ABNORMALITY
DETERMINATION
PERMITTED? — NO → (9)

YES

S702

BOTH NORMALITY
AND ABNORMALITY
DETERMINATION SET
TO OFF? — NO →

YES

S704

NO
CHANGE IN SWITCH
STATE? — YES →

NO

S710
SET PRELIMINARY
DETERMINATION TO OFF

S713
SET FORCIBLE POWER DISTRIBUTION
TO GLOW PLUG TO ON UPON PASSAGE
OF TIME FROM SWITCHING OF POWER
DISTRIBUTION TO ON

S714
EXECUTION OF GLOW ABNORMALITY
DETERMINATION NOT PERMITTED

(9)

S706

PRELIMINARY
ABNORMALITY
DETERMINATION
SET TO OFF? — NO →

S708
STOP PRELIMINARY
ABNORMALITY
DETERMINATON

YES

(9) → RETURN

# F I G. 26

# F I G. 27

# F I G. 28

EP 1 410 952 A2

# F I G. 29